# EUROPEAN PATENT SPECIFICATION

(11) **EP 4 019 595 B1**
(45) Date of publication and mention of the grant of the patent: **04.10.2023**
(21) Application number: 20854465.0
(22) Date of filing: 19.08.2020
(51) Int. Cl.: C09D 5/16, C09D 157/00, C09D 7/61, C09D 7/63, C09D 7/65

(54) **ANTIFOULING PAINT COMPOSITION**
NICHT FAULENDE FARBZUSAMMENSETZUNG
COMPOSITION DE PEINTURE ANTISALISSURE

(30) Priority: 22.08.2019 JP 2019152252
(43) Date of publication of application: 29.06.2022
(73) Proprietor: Nitto Kasei Co., Ltd., Osaka-shi Osaka 533-0031 (JP)
(72) Inventor: WAKU, Hidenori, Osaka-shi, Osaka 533-0031 (JP)
(74) Representative: Gulde & Partner
(86) International application number: PCT/JP2020/031210
(87) International publication number: WO 2021/033705

(56) References cited:
- EP-A1- 0 838 506
- WO-A1-2020/011839
- CN-A- 110 437 089
- JP-A- H 048 773
- JP-A- S 636 068
- JP-A- H0 264 167
- JP-A- H0 971 749
- JP-A- 2002 053 603
- JP-A- 2002 338 888
- JP-A- 2014 162 912
- JP-A- 2019 084 465
- JP-B2- H0 472 502

## Description

### TECHNICAL FIELD

The present invention relates to an antifouling coating composition for preventing aquatic fouling organisms from adhering and growing on an object, which is used or exists in underwater, for a long period of time.

### BACKGROUND ART

In the underwater of oceans, rivers, lakes, and the like, a large number of aquatic fouling organisms such as barnacles, sea squirts, tubeworms, common mussels, fresh-water mussel, *Bugula neritina,* green laver, sea lettuce and the like exist.

Conventionally, there has been a problem that above aquatic fouling organisms adhere onto the object which is used or exists in underwater, such as ships; fishing tools such as fishing nets (aquaculture nets, fixed nets, and the like), and fishing net accessories; jetties, tetrapods, port facilities, buoys, pipelines, bridges, water pipes of power plants, submarine bases, submarine oil drilling facilities, and other underwater structures. In particular, when ships and the like are immersed underwater for a long period of time, the afore-mentioned aquatic fouling organisms adhere and grow at the contacting portions with water. This would trigger decrease in ship speed, decrease in water flow rate and the like, resulting in significant economic and resource losses. Accordingly, in order to prevent the adhesion of aquatic fouling organisms, the application of antifouling coating has been considered to solve the problem.

For example, a silicone rubber based antifouling coating that forms a coating film of a mixture of silicone rubber and silicone oil has been proposed (JP S51-96830A, JP S56-26272 A, JP S63-43973 A, JP H3-255169 A). The formed coating prevents the adhesion of organisms such as barnacles due to its characteristics such as low surface free energy and low elastic modulus. In addition, the method of blending antifouling agents such as copper pyrithione has also been studied (JP 2013-515122 A). JP 2002 053603 A relates to an aqueous resin dispersion comprising a copolymer based on an ethylenically unsaturated monomer having a maleimide group and component derived from an ethylenically unsaturated monomer having a cycloalkyl group. JP 2019 084465 A discloses a coating composition, wherein the coating composition contains an alkoxysilyl group-containing (meth)acrylic resin. EP 0 838 506 A1 relates to a paint film which contains a coating composition comprising a film-forming resin and an organic polymer having at least one kind of alkoxysilyl groups. WO 2020/011839 A1 discloses a tie-coat composition comprising one or more binder polymers obtainable by copolymerizing a mixture of ethylenically unsaturated monomers and monomers comprising curable alkoxysilyl functional groups. JP S63 6068 A relates to coating compositions comprising an acrylic resin which is a copolymer of a hydrolyzable silyl group-containing acrylic monomer and an ethylenically unsaturated monomer. JP H02 64167 A describes an antifouling coating composition comprising a copolymer of radically polymerizable monomers having an ammonium salt type cationic group in a molecule, ethylene-based monomers copolymerizable therewith and functional group-containing monomers. JP H04 8773 A relates to an antifouling coating material, which comprises a specific organic-inorganic aqueous dispersion resin composition obtained by emulsion polymerization of a polymerizable unsaturated monomer in the presence of colloidal silica. JP 2014 162912 A discloses a coating material comprising an alkali-soluble resin which can be prepared by polymerizing a monomer component containing a monomer with alkali solubility. JP H09 71749 A relates to an anti-biofouling polymer having a fluoroalkyl group and a siloxane bond having a crosslinked structure. JP 2002 338888 A relates to a curable resin composition for coating materials wherein the resin material comprises a vinyl copolymer containing at least one hydrolyzable silyl group bonded to a carbon atom.

On the other hand, when spray-painting a silicone rubber based antifouling coating, it is necessary to cure a wide area around the painted area to prevent dust adhesion, resulting in very poor workability. In addition, due to its poor adhesiveness, it easily detaches at the interface with the base coating.

### SUMMARY OF INVENTION

### TECHNICAL PROBLEM

The present invention aims to provide an antifouling coating composition that can form an antifouling coating film with excellent adhesiveness and antifouling properties.

### SOLUTION TO PROBLEM

According to the present invention, an antifouling coating composition comprising a copolymer (A) and an antifouling agent, wherein the copolymer (A) has an alkoxysilyl group and an ethylenically unsaturated monomer unit and the ethylenically unsaturated monomer unit has a C6 to C24 branched alkyl group, wherein the copolymer (A) has the alkoxysilyl group at an end is provided.

The present inventors have conducted intensive studies to solve the afore-mentioned problems, and have found that the afore-mentioned problems can be solved, leading to the completion of the present invention.

### DESCRIPTION OF EMBODIMENTS

Hereinafter, the present invention will be described in detail.

### 1. Antifouling Coating Composition

The antifouling coating composition of the present invention comprises a copolymer (A). The composition of the present invention can be used as a one-pack type antifouling coating and has excellent workability.

### 1-1. Copolymer A

The copolymer (A) has an alkoxysilyl group and an ethylenically unsaturated monomer unit and the ethylenically unsaturated monomer unit has a C6 to C24 branched alkyl group, wherein the copolymer (A) has the alkoxysilyl group at an end. The ethylenically unsaturated monomer is a monomer with an ethylenically unsaturated double bond, for example, monomer (a) described below.

The copolymer (A) has the alkoxysilyl group at an end. The copolymer (A) may have the alkoxysilyl group both in a side chain and at an end.

The copolymer (A) having an alkoxysilyl group in the side chain can be obtained, in one example, by polymerizing a mixture containing a monomer having an alkoxysilyl group. Examples of the monomer containing an alkoxysilyl group include, for example, (meth) acrylate 3-(trimethoxysilyl) propyl, (meth) acrylate 3-(trimethoxysilyl) octyl, (meth) acrylate 3-(triethoxysilyl)propyl, (meth) acrylate 3-(methyldimethoxysilyl)propyl, ( (meth) acrylate 3 -(methyldiethoxysilyl) propyl, vinyltrimethoxysilane, vinyltriethoxysilane, octenyltrimethoxysilane, p-styryltrimethoxysilane.

The copolymer (A) with alkoxysilyl group in the side chain can also be prepared using a monomer having a first functional group and an alkoxysilyl compound having a second functional group and an alkoxysilyl group. Specifically, a copolymer having the first functional group in the side chain is prepared by polymerizing a mixture containing a monomer having the first functional group, and then, by reacting the first functional group of the copolymer with the second functional group of the alkoxysilyl compound to form a chemical bond, the copolymer (A) has the alkoxysilyl group derived from the alkoxysilyl compound in the side chain. Examples of the chemical bond include a urethane bond, a urea bond, an ether bond, and an ester bond. The first and second functional groups are a pair that can form such a chemical bond. For example, in the case of a urethane bond, the first functional group is a hydroxyl group and the second functional group is an isocyanate group.

When the second functional group is an isocyanate group, an alkoxysilyl compound having an alkoxysilyl group and an isocyanate group in the molecule can be used as the above alkoxysilyl compound. Examples of the alkoxysilyl compound include 3-isocyanatepropyltrimethoxysilane, 3-isocyanatepropyltriethoxysilane.

The copolymer (A) having an alkoxysilyl group at the end can also be prepared, in one example, by polymerizing a mixture containing a monomer and a chain transfer agent having an alkoxysilyl group. The copolymer (A) has the alkoxysilyl group derived from the chain transfer agent at the end. Examples of the chain transfer agent having an alkoxysilyl group mentioned above include, for example, 3-mercaptopropylmethyldimethoxysilane, 3-mercaptopropyltrimethoxysilane, and 3-mercaptopropyltriethoxysilane.

The copolymer (A) having an alkoxysilyl group at the end can also be prepared using a monomer, a chain transfer agent having a first functional group, and an alkoxysilyl compound having a second functional group and an alkoxysilyl group. Specifically, a copolymer having the first functional group at the end is prepared by polymerizing a mixture containing a monomer and a chain transfer agent having the first functional group, and then, by reacting the first functional group of the copolymer with the second functional group of the alkoxysilyl compound to form a chemical bond, the copolymer (A) has the alkoxysilyl group derived from the alkoxysilyl compound at the end. The details of the alkoxysilyl compound and the chemical bond are as described above.

The content of the alkoxysilyl group is 0.5 to 90 mol% with respect to the total mass of the monomer (a) and (b), preferably 0.5 to 15 mol%, and more preferably 1 to 10 mol% from the viewpoint of antifouling performance when left to stand for a long time and not causing coating film abnormalities

Examples of the polymerization initiator include azo compounds such as 2,2'-azobisisobutyronitrile, 2,2'-azobis (2-methylbutyronitrile), 2,2'-azobis (2,4-dimethylvaleronitrile), dimethyl-2,2'-azobisisobutyrate, dimethyl-2,2'-azobisisobutyrate, and 2,2'-azobis (N-butyl-2-methylpropionamide; peroxides such as benzoylper oxide, di-tert-butyl peroxide, tert-butyl peroxybenzoate, tert-butyl peroxyisopropyl carbonate, t-butyl peroxy-2-ethylhexanoate, t-hexylperoxy-2-ethylhexanoate , di-t-hexyl peroxide, t-butylperoxy-2-ethylhexyl monocarbonate, di-t-butyl peroxide, 1,1,3,3-tetramethylbutylperoxyneodecanoate, t- amylperoxyneodecanoate, t-hexylperoxypivalate, t-amylperoxypivalate, 1,1,3,3-tetramethylbutylperoxy-2-ethylhexanoate, 1,1-bis (1,1-dimethylethylperoxy) cyclohexane and 2,2-bis (4,4-di-t-butylperoxycyclohexyl) propane. These polymerization initiators may be used alone, or two or more of these can be used in combination. As the polymerization initiator, in particular, 2,2'-azobisisobutyronitrile, 2,2'-azobis(2-methylbutyronitrile), 2,2'-azobis(2,4-dimethylvaleronitrile), dimethyl 2,2'-azobisisobutyrate and 1,1,3,3-tetramethylbutylperoxy-2-ethylhexanoate, 1,1-bis(1,1-dimethylethylperoxy)cyclohexane, 2,2-bis(4,4-di-t-butylperoxycyclohexyl)propane are preferred.

The molecular weight of the copolymer (A) can be adjusted by appropriately setting the amount of polymerization initiator used or by using a chain transfer agent. Examples of the chain transfer agent include 3-mercapto-1-propanol, 2,4-diphenyl-4-methyl-1-pentene, , and 2-ethylhexyl 3-mercaptopropionate.

The weight average molecular weight (Mw) of the copolymer (A) is preferably 3000 to 300000. When the molecular weight is less than 3,000, the coating film of the antifouling coating becomes fragile and cracks and peeling occur easily. When the molecular weight exceeds 300,000, the viscosity of the copolymer solution increases and the copolymer solution becomes difficult to handle. This Mw may specifically be, for example, 3000, 5000, 10000, 20000, 30000, 4 0000, 50000, 60000, 70000, 80000, 90000, 100000, 2 00000, 300000 and may be within the range between any two of the numerical values exemplified here.

Examples of the polymerization method include solution polymerization, bulk polymerization, emulsion polymerization, suspension polymerization, and non-aqueous dispersion polymerization. Among these, solution polymerization and non-aqueous dispersion polymerization are particularly preferred from the viewpoint of the ability to obtain the copolymer easily and accurately.

In the above polymerization reaction, an organic solvent may be used as necessary. Examples of the organic solvent include aromatic hydrocarbon solvents such as xylene, ethylbenzene, and toluene; aliphatic hydrocarbon solvents such as hexane, heptane, and mineral spirits; ester solvents such as ethyl acetate, butyl acetate, isobutyl acetate, methoxypropyl acetate, 2-methoxy-1-methylethyl acetate; alcohol solvents such as ethanol, isopropyl alcohol, butyl alcohol, and 1-methoxy-2-propanol; ether solvents such as dioxane, diethyl ether, and dibutyl ether; and ketone solvents such as methyl ethyl ketone, methyl isobutyl ketone, and cyclohexanone. Among these, aromatic hydrocarbon solvents are particularly preferred, and xylene is more preferred. These solvents can be used alone, or two or more of these solvents can be used in combination.

The reaction temperature in the polymerization reaction can be set appropriately according to the types of the polymerization initiator and the like and is usually 50 to 170°C, preferably 60 to 150°C. The reaction time in the polymerization reaction can be set appropriately according to the reaction temperature and the like and is usually 4 to 10 hours.

The polymerization reaction is preferably carried out under an inert gas atmosphere such as nitrogen gas or argon gas.

The copolymer (A) is preferably a copolymer of a monomer (a) and a monomer (b) other than the monomer (a) and can be obtained by copolymerizing a mixture containing monomer (a) and (b). The copolymerization is carried out, for example, in the presence of a polymerization initiator. The copolymer (a) may be a random copolymer, an alternating copolymer, a periodic copolymer, or a block copolymer of the monomer (a) and (b).

The monomer containing an alkoxysilyl group or the first functional group may be contained in either the monomer (a) or the monomer (b).

### <Monomer (a)>

The monomer (a) is an ethylenically unsaturated monomer having a C6 to C24 branched alkyl group.

The number of carbons in the above alkyl group is preferably 6 to 20, may be 4, 5, 6, 7, 8, 9, 10, 11, 12, 1 3, 14, 15, 16, 17, 18, 19, 20, and may be within the range between any two of the numerical values exemplified here. The above alkyl group is preferably a C6 to C20 branched alkyl group.

Examples of the above alkyl group include 2-ethylhexyl, n-octyl, isononyl, isodecyl, 2 - propylheptyl, lauryl, tridecyl, stearyl, isostearyl, and neodecane.

Examples of the monomer (a) include (meth) acrylic acid alkyl esters such as 2-ethylhexyl (meth) acrylate, n-octyl (meth) acrylate, isononyl (meth) acrylate, isodecyl (meth) acrylate, 2-propyl heptyl (meth) acrylate, lauryl (meth) acrylate, tridecyl (meth) acrylate, stearyl (meth) acrylate, isostearyl (meth) acrylate, octoxy polyethylene glycol polypropylene glycol methacrylate, nonylphenoxy polyethylene glycol polypropylene glycol acrylate;
vinylesters such as 2-ethylhexylate vinylester, versatic acid vinylester, neodecanoic acid vinylester.

These monomers may be used alone, or two or more of these monomers can be used in combination

The content of the monomer (a) is 1 to 90 mol% with respect to the total mol of the monomer (a) and (b), preferably 2 to 30 mol%, and more preferably 3 to 10 mol% by mass by mass from the viewpoint of antifouling performance when left to stand for a long time and not causing coating film abnormalities The content of the monomer (a) is, for example, 1, 2, 5, 10, 15 20, 25, 30, 35, 40, 45, 50, 55, 60 65, 70, 75, 80, 85, 90 mol%, and may be within the range between any two of the numerical values exemplified here.

### <Monomer (b)>

The monomer (b) is a monomer other than the monomer (a), and is preferably an ethylenically unsaturated monomer.

Examples of the monomer (b) include, for example:
(meth) acrylic acid silyl esters such as triisopropylsilyl acrylate, triphenylsilyl acrylate, diisopropylphenylsilyl acrylate, and diisopropylcyclohexylsilyl acrylate;
(meth) acrylic acid esters such as methyl (meth) acrylate, ethyl (meth) acrylate, butyl (meth) acrylate, isobutyl (meth) acrylate, t-butyl (meth) acrylate, allyl (meth) acrylate, cyclohexyl (meth) acrylate, benzyl (meth) acrylate, phenyl (meth) acrylate, isobornyl (meth) acrylate, 4-hydroxybutyl acrylate glycidyl ether, N-isopolopylacrylamide, (meth) acrylic 2- (dimethylamino) ethyl, (meth) acrylic 2- (2-ethoxyethoxy) ethyl, (meth) acrylic 2- (2-methoxyethoxy) ethyl, (meth) acrylic acid, (meth) acrylic 4-hydroxybutyl, polypropylene glycol (meth) acrylate, (meth) acrylic tetrahydrofurfuryl, (meth) acrylic 3-chloro-2-hydroxypropyl, (meth) acrylic 2-ethoxyethyl, (meth) acrylic hydroxypropyl, (meth) acrylic 2-methoxyethyl, methoxypolyethylene glycol (meth) acrylate, 2- (2-ethoxyethoxy) ethyl (meth) acrylate, 2- [2- (2-ethoxyethoxy) ethoxy] ethyl (meth) acrylate, N, N'-diethylacrylamide, (meth) acrylic 3-methoxybutyl, (meth) acrylic 2-hydroxybutyl, mono(2-acryloyloxyethyl) succinate, N- (3-dimethylaminopropyl) (meth) acrylamide, 2-hydroxyethyl (meth) acrylate, (meth) acrylate 2- [2- (2-methoxyethoxy) ethoxy] ethyl, N,N'-dimethyl (meth)acrylamide, 2- (2-methoxyethoxy) ethyl (meth) acrylate , hydroxypropyl (meth) acrylate, (meth) acrylate 2- (acetoacetyloxy) ethyl, (meth) acrylate 2- (2-hydroxyethoxy) ethyl, glycidyl acrylate, N-vinyl-2-pyrrolidone, silicone modified (meth) acrylate, and glycerin monomethacrylate;
vinyl compounds with a functional group such as acrylonitrile, vinyl propionate, and vinyl acetate;
dicarboxylic acid esters such as itaconic acid, maleic acid, and succinic acid;
styrenes such as styrene, and alpha-methylstyrene.

These monomers may be used alone, or two or more of these monomers can be used in combination.

### 1-2. Other Additives

The antifouling coating composition of the present invention may contain a bleeding oil, a curing catalyst, filler, an antifouling agent, an organic solvent, a coating film-forming component other than the copolymer (A), a plasticizer, a release modifier, a pigment such as a colored pigment, a constitutional pigment, and an anti-corrosion pigment, a dehydrating agent, an anti-tarring agent, a silane coupling agent, a reactive oil, a defoaming agent as necessary.

### <Bleeding Oil (B)>

A bleeding oil (B) is a component which bleeds out at the surface of the coating film formed with the composition of the present invention, thereby providing antifouling properties. As the bleeding oil (B), in particular, silicone oil, graft copolymer including acrylic polymer and dimethylpolysiloxane, perfluorinated polyether oil, polyglyceryl-10 pentaoleate, polyoxyethylene fatty acid ester, sorbitan fatty acid ester, polyoxyethylene sorbitan fatty acid ester, polyoxyethylene castor oil, polyoxyethylene hardened castor oil, glyceryl undecylenate and the like can be mentioned. One of these compounds can be used alone, or two or more of these compounds can be used in combination.

As the silicone oil, silicone oil which have been conventionally used for a silicone rubber based antifouling coating can be used. The viscosity of the bleeding oil is preferably 20 to 100,000 mm²·s, more preferably 50 to 10,000 mm²·s.

The silicone oil can be categorized into straight silicone oil and modified silicone oil. Here, in the composition of the present invention, either one of these can be used.

As the straight silicone oil, for example, dimethyl silicone oil, methylphenyl silicone oil, diphenyl silicone oil, methylhydrogen silicone oil and the like can be mentioned. Any of these straight silicone oils can be used. Here, methylphenyl silicone oil and the like are preferable.

As a commercially available straight silicone oil, KF-99, KF-9901, KF-50, KF-53, KF-54, KF-56, HIVAC-F-5, X-21-3265, KF-96, (all available from Shin-Etsu Chemical Co., Ltd.); DOWSIL 200Fluid, DOWSIL 510Fluid, DOWSIL SH510Fluid, DOWSIL SH550Fluid, DOWSIL 550Fluid, DOWSIL SH710 Fluid (all available from DuPont Toray Specialty Materials K.K.) Bluesil FLD47V100, Bluesil FLD47V500, Bluesil FLD47V1000, Bluesil FLD550 (all available from Bluestar Silicon Materials Co., Ltd.); TSF451, TSF4300, TSF437, TSF400, TSF401, TSF484, TSF433, TSF431 (all available from Momentive Performance Material, Inc.) and the like can be mentioned.

Modified silicone oil can be categorized as alkyl aralkyl modification, amino modification, carboxyl modification, epoxy modification, polyether modification, alkyl aralkyl-polyether modification, polyglycoside modification, polyglycerin modification, polyglycerin-alkyl modification, carbinol modification, methylstyryl modification, alkyl modification, higher fatty acid ester modification, higher fatty acid amide modification, hydrophilic specialized modification, higher alkoxy modification, higher fatty acid containing modification, fluorine modification and the like, depending on the type of the modification. Any of these modified silicone oil can be used. Particularly, silicone oil of amino modification, alkyl aralkyl modification, epoxy modification, polyether modification or alkyl aralkyl·polyether modification and the like are preferable.

As a commercially available alkyl aralkyl modified silicone oil, KF-410, KF-412, KF-414, KF-7235B, X-22-7322, X-22-1877 (all available from Shin-Etsu Chemical Co., Ltd.); TSF4421, XF42-334, XF42-B3629 (all available from Momentive Performance Material, Inc.) can be mentioned.

As a commercially available amino modified silicone oil, DOWSIL BY 16-849 Fluid, DOWSIL 16-853 U Fluid (all available from The Dow Chemical Company); FZ3712, AFL-40 (all available from ENEOS NUC Corporation); KF-859, KF-861, KF-865, X-22-161, KF-8008, X-22-9409, KF-8001 (all available from Shin-Etsu Chemical Co., Ltd.); TSF4700, TSF4701 (all available from Momentive Performance Material, Inc.) can be mentioned.

As a commercially available carboxyl modified silicone oil, DOWSIL BY 16-750 Fluid (available from The Dow Chemical Company); FXZ3707 (available from ENEOS NUC Corporation); X-22-3701E, X-22-3710, X-22-162C (all available from Shin-Etsu Chemical Co., Ltd.) can be mentioned.

As a commercially available epoxy modified silicone oil, DOWSIL BY 16-870 Fluid, DOWSIL BY 16-839 Fluid (all available from The Dow Chemical Company); L-9300, T-29 (all available from ENEOS NUC Corporation); KF-101, KF-102, KF-105 (all available from Shin-Etsu Chemical Co., Ltd.); TSF4730, YF3965 (all available from Momentive Performance Material, Inc.) can be mentioned.

As a commercially available polyether modified silicone oil, DOWSIL SH28 Paint Additive, DOWSILSF8428 Fluid, DOWSILSF8427 Fluid, DOWSILFZ-2104, DOWSILFZ-2164, DOWSIL FZ-2191, DOWSIL FZ-2101, DOWSIL BY 16-036 (all available from The Dow Chemical Company); KF-945, KF-6015, KF-6017, KF-6020, KF-6123, X-22-4515, X-22-4272 (available from Shin-Etsu Chemical Co., Ltd.); TSF4440, TSF4441, TSF4445, TSF4446, TSF4452, TSF4460 (all available from Momentive Performance Material, Inc.); BELSIL OW 1500, BELSIL DMC 6038, BELSIL DMC 6031 (all available from Wacker Chemie AG) can be mentioned.

As a commercially available alkyl aralkyl-polyether modified silicone oil, DOWSIL SF8416 Fluid (available from The Dow Chemical Company); X-22-2516, X-22-6548 (all available from Shin-Etsu Chemical Co., Ltd.); TSF4450 (available from Momentive Performance Material, Inc.) can be mentioned.

As a commercially available polyglycoside modified silicone oil, BELSIL SPG 128 VP (available from Wacker Chemie AG) can be mentioned.

As a commercially available polyglycoside alkyl modified silicone oil, BELSIL WO 5000 (available from Wacker Chemie AG) can be mentioned.

As a commercially available polyglycerin modified silicone oil, KF-6100, KF-6104, KF-6106 (all available from Shin-Etsu Chemical Co., Ltd.) can be mentioned.

As a commercially available polyglycerin-alkyl modified silicone oil, KF-6105 (available from Shin-Etsu Chemical Co., Ltd.) can be mentioned.

As a commercially available carbinol modified silicone oil, X-22-4015, X-22-160AS, KF-6001, KF-6002, KF-6003, X-22-170DX, X-22-176 (all available from Shin-Etsu Chemical Co., Ltd.) can be mentioned.

As a commercially available higher fatty acid ester modified silicone oil, X-22-715 (available from Shin-Etsu Chemical Co., Ltd.); TSF410, TSF411 (all available from Momentive Performance Material, Inc.) can be mentioned. As a commercially available higher fatty acid amide modified silicone oil, KF-3935 (available from Shin-Etsu Chemical Co., Ltd.) can be mentioned.

As a commercially available graft copolymer including acrylic polymer and dimethylpolysiloxane, KP-578, KP-541, KP-543, KP-545, KP-550, KP-545L (all available from Shin-Etsu Chemical Co., Ltd.) can be mentioned.

As a commercially available fluorine modified silicone oil, FL-5, X-22-821, FL-100 (all available from Shin-Etsu Chemical Co., Ltd.) can be mentioned.

As a commercially available perfluorinated polyether oil, FLUOROLINK E10-H, FLUOROLINK 5147X, FLUOROLINK S10, FLUOROLINK MD700, FLUOROLINK AD1700, FLUOROLINK P54, FLUOROLINK TLS 5018, FLUOROLINK F10, FLUOROLINK P56, FLUOROLINK A10P, FLUOROLINK PA100E, FOMBLIN HC/04, FOMBLIN HC/25, FOMBLIN HC/R, FOMBLIN HC/OH-1000, FOMBLIN HC/SA-18 (all available from Solvay SA) can be mentioned.

As a commercially available polyoxyethylene fatty acid ester, polyoxyethylene oleate (product name: NIKKOL MYO-6V, available from Nikko Chemicals Co., Ltd.), polyoxyethylene laurate (product name: NIKKOL MYL-10, available from Nikko Chemicals Co., Ltd.), dioleate PEG-2 (product name: EMALEX DEG-di-O, available from Nihon Emulsion Co., Ltd.), dioleate PEG-6 (product name: EMALEX 300di-O, available from Nihon Emulsion Co., Ltd.), polyoxyethylene (30) lanolin (product name: Aqualose L30, available from Croda International pic), polyoxyethylene (75) lanolin (product name: PEG-75Flake, available from NK Chemical), polyoxyethylene (40) castor oil (product name NIKKOL CO-40, available from Nikko Chemicals Co., Ltd.), hydrogenated polyoxyethylene (50) castor oil (product name: NIKKOL HCO-50, available from Nikko Chemicals Co., Ltd.) can be mentioned.

The content of the above bleeding oil (B) in the composition of the present invention is not limited, but preferably 2 to 200 parts by mass with respect to 100 parts by mass of the above copolymer (A) and more preferably 3 to 150 parts by mass. When the content of the bleeding oil (B) is less than 2 parts by mass, the antifouling effect may not be exhibited for a long period of time. When the content of the bleeding oil (B) is more than 200 parts by mass, the strength of the obtained coating film may decrease, and the antifouling effect may not be maintained.

### <Curing Catalyst>

Examples of the curing catalyst include metal curing catalysts:
organic tin compounds such as dibutyltin dilaurate and dibutyltin bis (acetylacetone);
organic titanium acid esters such as tetrabutyl titanate and tetraisopropyl titanate;
organic titanium chelate compounds such as diisopropoxybis (acetylacetonate) titanium and diisopropoxybis (ethylacetoacetate) titanium;
organoaluminium compounds such as aluminum tris (acetylacetonate) and aluminum tris (ethylacetacetate);
organic zirconium compounds such as zirconium tetra (acetylacetonate), and zirconium tetrabutyrate;
amine compounds such as 1-amino-2-ethylhexane, 3- (trimethoxysilyl) propylamine, N-2-aminoethyl-3-aminopropyltrimethoxysilane, N, N, N', N'-tetramethyl-N" - [3- (trimethoxysilyl) propyl] guanidine, and 3-triethoxysilyl-N- (1,3-dimethylbutylidene) propylamine.

These can be used alone, or two or more of these can be used in combination.

### <Filler>

The composition of the present invention can further contain inorganic filler and/or organic filler for the purpose of controlling flowability and thixotropic property, or for the purpose of improving mechanical strength of the coating film.

The content of the inorganic filler in the composition of the present invention is usually from 1 to 100 parts by mass with respect to 100 parts by mass of copolymer (A), and preferably from 2 to 60 parts by mass. This content may be, for example, 1, 2, 3, 4, 5, 6, 7, 8, 9, 10, 20, 30, 40, 50, 60, 70, 80, 90, 100, and may be within the range between any two of the numerical values exemplified here.

### <Antifouling Agent>

The composition of the present invention further contains an antifouling agent. As the antifouling agent, for example, inorganic agent and organic agent can be mentioned.

As the inorganic agent, for example, cuprous oxide, cuprous thiocyanate (generic name: copper rhodanide), copper powder, copper carbonate, copper chloride, copper-nickel alloy, brass, silver chloride, silver nitrate, and the like can be mentioned. Among these, cuprous oxide and copper rhodanide are preferable. Cuprous oxide surface-treated with glycerin, sucrose, stearic acid, lauric acid, rishitin, mineral oil and the like is more preferred in terms of long-term stability during storage.

As the organic agent, for example, copper 2-mercaptopyridine-N-oxide (generic name: copper pyrithione), zinc 2-mercaptopyridine-N-oxide (generic name: zinc pyrithione), zinc ethylenebis dithiocarbamate (generic name: Zineb), zinc dimethyldithiocarbamate (generic name: Ziram), a complex compound of manganese N,N'-ethylenebis (dithiocarbamate) and zinc N,N'-ethylenebis (dithiocarbamate) (generic name: Mancozeb), pyridine-triphenylborane, 4,5-dichloro-2-n-octyl-3-isothiazolone (generic name: SEA-NINE 211), 3,4-dichlorophenyl-N-N-dimethylurea (generic name: Diuron), 2-methylthio-4-t-butylamino-6-cyclopropylamino-s-triazine (generic name: Irgarol 1051), 4-bromo-2-(4-chlorophenyl)-5 -(trifluoromethyl)-1H-pyrrole-3-carbonitrile (generic name: Tralopyril), (±) 4-[1-(2,3-dimethylphenyl)ethyl]-1H-imidazole (generic name: Medetomidine), N-{[dichloro(fluoro)methyl]sulfanyl}-N', N'-dimethyl-N-p-tris sulfamide (generic name: Tolylfluanid), N-(dichlorofluoromethylthio)-N-(dimethylaminosulfonyl)aniline (generic name: Dichlofluanid), N-[(4-hydroxy-3-methoxyphenyl)methyl]-8-methyl-6-nonenamide (generic name: Capsaicin), 5,10-dihydro-5,10-dioxonaphto[2,3-b]-1,4-dithi-ine-2,3-dicarbonitrile (generic name: Dithianon), Avermectin Bla, Avermectin Bib and the like can be mentioned. One or two or more of these antifouling agents can be used in combination.

### <Solvent>

The composition of the present invention is usually dissolved or dispersed in organic solvent. Accordingly, the composition can be suitably used as coating. As the organic solvent, for example, xylene, toluene, hexane, heptane, octane, cyclohexane, acetone, methyl ethyl ketone, methyl isobutyl ketone, diisobutyl ketone, butyl acetate, 2-ethoxyethyl acetate, propanol, isoamyl alcohol, n-butanol, propylene glycol monomethyl ether, ethylene glycol monomethyl ether, ethylene glycol monoethyl ether, ethylene glycol tertiary butyl ether, ethylene glycol monobutyl ether, 3-methoxy-3-methyl-1-butanol, ethylene glycol monopropyl ether, ethylene glycol phenyl ether, diethylene glycol monobutyl ether, dipropylene glycol monomethyl ether, ethylene glycol, diethylene glycol, propylene glycol, decamethylcyclopentasiloxane, octamethyltrisiloxane, aromatic hydrocarbon, aliphatic hydrocarbon, white spirit, alicyclic hydrocarbon based solvent, naphthene based hydrocarbon, mineral spirit, aliphatic solvent naphtha, isoparaffin, normal paraffin, glycol-based ester and the like can be mentioned.

These organic solvents can be used alone, or two or more of these solvents can be used in combination.

### <Coating Film-Forming Components other than Copolymer (A)>

Examples of the coating film-forming components other than the copolymer (A) include organopolysiloxane, silicone modified epoxy resins, acrylic resins, trialkylsilyl (meth) acrylate copolymer resins, polyester resins, polyester polyol resins, biodegradable bio-polyester resins, epoxy resins, maleic acid copolymer resins, silicone modified acrylic resins, fluoropolymers, polybutene resins, urethane resins, urethane rubbers, polyester-modified silicones, silicone rubbers, nitrile rubbers, isoprene rubbers, natural rubbers, polyamide resins, polybutadiene resins, both terminal hydroxyl groups polybutadiene, styrene butadiene copolymer resins, ethylene vinyl acetate copolymer resins, petroleum resins, alkyd resins, vinyl ether-vinyl chloride copolymer resins, vinyl chloride resins, chloride rubber, chlorinated polyolefin resin. These can be used alone, or two or more of these can be used in combination.

### <Plasticizer>

As the plasticizer, for example, phosphate esters, phthalate esters, adipate esters, sebacate esters, epoxidized soybean oil, alkyl vinyl ether polymer, polyalkylene glycols, t-nonyl pentasulfide, vaseline, polybutene, tris(2-ethylhexyl) trimellitate, silicone oil, chlorinated paraffin, paraffin and the like can be mentioned. These can be used alone, or two or more of these can be used in combination. The content of the plasticizer is usually approximately 20 parts by mass or less with respect to 100 parts by mass of the copolymer (A), preferably 1 to 10 parts by mass.

### <Release Modifier>

As the release modifier, for example, monocarboxylic acid, and salts thereof such as rosin, rosin derivative, naphthenic acid, neodecanoic acid, cycloalkenyl carboxylic acid, bicycloalkenyl carboxylic acid, versatic acid, trimethyl isobutenyl cyclohexene carboxylic acid, and metal salts thereof, or the alicyclic hydrocarbon resin, coumaron resin can be mentioned. These can be used alone, or two or more of these can be used in combination.

As the rosin derivative, hydrogenated rosin, disproportionated rosin, maleic acid modified rosin, formylated rosin, polymerized rosin, rosin ester, hydrogenated rosin ester, and the like can be exemplified.

Among these, rosin, rosin derivative, naphthenic acid, versatic acid, trimethyl isobutenyl cyclohexene carboxylic acid or metal salts thereof are preferable.

### <Dehydrating Agent>

As the dehydrating agent, zeolite, calcium sulfate anhydrite, calcium sulfate hemihydrite, tetra methoxy silane, tetra ethoxy silane, methyl trimethoxy silane, vinyl trimethoxy silane, methyl triisopropenoxy silane, ethyl triisopropenoxy silane, vinyl triisopropenoxy silane and the like can be mentioned. These can be used alone, or two or more of these can be used in combination.

### <Anti-tarring Agent>

Examples of the anti-tarring agent include fatty acid amide, polyethylene oxide, silica, fumed silica. These can be used alone, or two or more of these can be used in combination.

### 2. Manufacturing Method of Antifouling Coating Composition

The antifouling coating composition of the present invention can be prepared by mixing and dispersing the copolymer (A), and if necessary, bleeding oil (B), curing catalyst, inorganic filler, antifouling agent, organic solvent, plasticizer, dehydrating agent and the like, using highspeed disperser such as paint shaker, mixer, and dissolver; ultrasonic homogenizer, ball mill, planetary ball mill, pearl mill, wet jet mill, and grinder.

The antifouling coating composition of the present invention can be provided as one-pack coating or two or more multi-pack coating. When the composition is provided as the two or more multi-pack coating, each of the mixture containing one or a plurality of components is packaged and stored in a separate container. For example, when a mixture containing one or more types of the copolymer (A) as a major component is designated as liquid a, and a mixture containing one or more types of crosslinkers as a major component is designated as liquid b, the antifouling coating composition of the present invention is prepared by mixing liquid a and liquid b.

### 3. Method for Antifouling Treatment

The method for antifouling treatment of the present invention is characterized in that the afore-mentioned antifouling coating composition is used to form an antifouling coating film on the surface of an object that is subjected to coating.

Since curing of the coating composition of the present invention proceed gradually by absorbing moisture in air, it is preferable to prepare the composition just before use and apply the composition as soon as possible after preparation.

As the object that is subjected to coating, ships; fishing tools such as fishing nets (aquaculture nets, fixed nets and the like), fishing net accessories; jetties, tetrapods, port facilities, buoys, pipelines, bridges, water pipes of power plants, submarine bases, submarine oil drilling facilities, and other underwater structures and the like can be mentioned.

The antifouling coating film of the present invention can be formed by applying the antifouling coating composition on the surface (entirely or partially) of the object that is subjected to coating.

Application of the antifouling coating composition can be performed by applying the composition one time, or by overcoating the composition by plurality of times by known coating method.

Examples of the coating method include brush coating, spray coating, dipping, flow coating, and spin coating. These coating methods can be employed singly or in combination.

After the coating, the curing proceeds by absorbing moisture (moisture in air for example), thereby forming the antifouling coating film of the present invention. Curing proceeds also at ambient temperature (25°C). Here, for example, curing can be accelerated by heating up to approximately 80°C.

### 4. Antifouling Coating Film and Coated Object

The antifouling coating film can be formed by using the composition of the present invention.

The thickness of the antifouling coating film can be suitably selected depending on the type of the object that is subjected to coating. Usually, a coating film of 30 to 400 µm, preferably 30 to 200 µm is applied per one coating, and it is appropriate that the coating film is applied a plurality of times to achieve a film thickness of 100 to 1000 µm after curing.

The coated object of the present invention has the antifouling coating film on its surface. The coated object of the invention can have the antifouling coating film on its entire surface, or on its partial surface.

The coated object of the present invention can exhibit the antifouling effect continuously. Accordingly, the coated object can be suitably used as the ship (in particular, ship bottom), fishing tools, structures submerged in seawater, and the like.

### EXAMPLE

Examples and the like are provided hereinafter, and further clarify characteristics of the present invention. The present invention, however, is not limited to these Examples and the like.

### 1. Production Example of Copolymer

Examples 1 to 4, 19 to 23 and 36 are comparative examples.

### <Production Example 1 (Production of CopolymerA1)>

To a four-necked flask equipped with a thermometer, a cooler, a stirrer, and a dropping funnel, 260 g of xylene (containing ethylbenzene) (initial solvent) was charged, and nitrogen gas was introduced, and the solvent was stirred with maintaining at 100°C. Then, a mixture of 105 g of 3-methacryloxypropyltrimethoxysilane, 119 g lauryl methacrylate, 308g of n-butyl acrylate, 161g of methyl methacrylate, 7g of 3-mercaptopropyltrimethoxysilane, 5.1 g of 1,1,3,3-tetramethylbutyl peroxy-2-ethylhexanoate (initial addition), and 30 g of xylene (containing ethylbenzene) was added dropwise thereto over 3 hours while maintaining the temperature at 100°C. Then, after stirring at 100°C for 1 hour, 0.3 g of 1,1,3,3 -tetramethylbutylperoxy-2-ethylhexanoate (added later) was added three times every hour. After stirring for 2 hours at the same temperature, 10 g of xylene (containing ethylbenzene) (diluting solvent) was added, and the mixture was cooled to room temperature to obtain copolymer solution A1. The heating residue and Mw ofA1 are shown in Table 1.

### <Production Examples 2 to 47, 54 to 66>

Using the monomers, polymerization initiators, and solvents shown in Tables 1 to 8 and 10 to 13, the polymerization reaction was carried out in the same manner as in Production Example 1 under each reaction temperature condition to obtain copolymer solutions A2 to A47. Table 1 to 8, 10 to 13 shows the heating residue and Mw of A2 to A47 and A54 to A66. The numerical value in the table is mass%.

### <Production Example 48 (Production of Copolymer A48)>

To a four-necked flask equipped with a thermometer, a cooler, a stirrer, and a dropping funnel, 260 g of xylene (containing ethylbenzene) (initial solvent) was charged, and nitrogen gas was introduced, and the solvent was stirred with maintaining at 88°C. Then, a mixture of 70 g of isononyl acrylate, 21 g of n-butyl acrylate, 7 g of methyl methacrylate, 7 g of styrene, 7 g of tetrahydrofurfuryl acrylate, 147 g of 2-methoxyethyl acrylate, 21 g of 2-methoxyethyl methacrylate, 14 g of methoxypolyethylene glycol methacrylate (Mn about 500), 21 g of 2- (2-ethoxyethoxy) ethyl acrylate, 14 g of 4-hydroxybutyl acrylate, 14 g of polypropylene glycol methacrylate, 308 g of triisopropylsilyl methacrylate, 14 g of triisopropylsilyl acrylate, 21 g of silicone modified acrylate (Mn = 1000), 7 g of silicone modified acrylate (Mn=10000), 7 g of 3-mercapto-1-propanol, 2.2 g of 1,1,3,3-tetramethylbutylperoxy-2-ethylhexanoate (initial addition), and 30 g of xylene (containing ethylbenzene) was added thereto dropwise over 3 hours while maintaining the temperature at 88°C. Then, after stirring at 88°C for 1 hour, 0.3 g of 1,1,3,3 - tetramethylbutylperoxy-2-ethylhexanoate (added later) was added three times every hour. After stirring for 2 hours at the same temperature, 10 g of xylene (containing ethylbenzene) (diluting solvent) was added. In addition, 45 g of 3-isocyanate propyltrimethoxysilane was added and the mixture was stirred at the same temperature for 1 hour. After confirming that the isocyanate peak derived from 3-isocyanate propyltrimethoxysilane has disappeared by IR, the mixture was cooled to room temperature to obtain copolymer solution A48. The heating residue and Mw of A48 are shown in Table 9.

### <Production Examples 49 to 53>

Using the monomers, polymerization initiators, and solvents shown in Table 9, the polymerization reaction was carried out in the same manner as in Production Example 48 under each reaction temperature condition to obtain copolymer solutions A49 to A53. The heating residue and Mw of A49 toA53 are shown in Table 9. The numerical value in the table is mass%.

**[Table 1]**

| Table 1 | | | Production Example | | | | | |
|---|---|---|---|---|---|---|---|---|
| | | | 1 | 2 | 3 | 4 | 5 | 6 |
| initial solvent | | xylene (containinq ethylbenzene) | 260 | 260 | 260 | 260 | 260 | 260 |
| alkoxysilyl group-containing monomer | | 3-methacryloxypropyltrimethoxysilane | 105 | 84 | 154 | 175 | 14 | |
| | | methacryloxyoctyltrimethoxysilane | | | | | | 140 |
| monomer(a) branched | | issonyl acrylate | | | | | 70 | 238 |
| monomer(a) linear chain | | lauryl methacrylate | 119 | 350 | 112 | 105 | | |
| monomer(b) | | n-butyl acrylate | 308 | 63 | 315 | 322 | 378 | 140 |
| | | methyl methacrylate | 161 | 196 | 112 | 91 | 231 | 168 |
| alkoxysilyl group-containing chain transfer agent | | 3-mercaptopropyltrimethoxysilane | 7 | 7 | 7 | 7 | 7 | |
| chain transfer agent | | 2,4-diphenyl-4-methyl-l-pentene | | | | | | 14 |
| solvent in dropping funnel | | xylene (containing ethylbenzene) | 30 | 30 | 30 | 30 | 30 | 30 |
| polymerization initiator | initial addition | 1,1,3,3-tetramethylabutyl peroxy-2-ethylhexanoate | 5.1 | 3.9 | 3.9 | 3.9 | 7.8 | 5.8 |
| | added later 3 times | | 0.3 each | 0.3 each | 0.3 each | 0.3 each | 0.3 each | 0.3 each |
| dilution solvent | | xylene (containing ethylbenzene) | 10 | 10 | 10 | 10 | 10 | 5 |
| | | 2-methoxy-l-methylethyl acetate | | | | | | 5 |
| reaction temperature [°C] (within the range of ± 5 °C) | | | 100 | 100 | 100 | 100 | 100 | 88 |
| properties of copolymer solution | | heating residue [%] | 69.8 | 69.4 | 69.7 | 69.2 | 70.4 | 68.3 |
| | | weight average molecular weight [Mw] | 25000 | 26200 | 28700 | 30200 | 22800 | 47900 |
| name of copolymer solution | | | A1 | A2 | A3 | A4 | A5 | A6 |

**[Table 2]**

| Table 2 | | | Production Example | | | | | |
|---|---|---|---|---|---|---|---|---|
| | | | 7 | 8 | 9 | 10 | 11 | 12 |
| initial solvent | | xylene (containing ethylbenzene) | 260 | 210 | 260 | 210 | 210 | 260 |
| | | n-butanol | | 50 | | 50 | 50 | |
| alkoxysilyl group-containing monomer | | 3-methacryloxypropylmethyldimethoxysilane | | | | 3.5 | | |
| | | 3-methacryloxypropyltrimethoxysilane | 14 | 14 | 7 | 7 | | 14 |
| | | 3-methacryloxypropylmethyldiethoxysilane | | | | 3.5 | | |
| | | methacryloxyoctyltrimethoxysilane | | | 7 | | | |
| monomer(a) branched | | 2-ethylhexyl acrylate | | | | 7 | 7 | 70 |
| | | issonyl acrylate | 70 | 140 | 280 | 14 | 14 | |
| | | isodecyl acrylate | | | | 7 | 7 | |
| | | izodecyl methacrylate | | | | 7 | 7 | |
| | | 2-propylheptyl acrylate | | | | 7 | 7 | |
| | | tridecyl methacrylate | | | | 14 | 14 | |
| | | isostearyl acrylate | | | | 14 | 14 | |
| monomer(b) | | n-butyl acrylate | | 238 | 154 | 203 | 35 | 350 |
| | | methyl methacrylate | 462 | 196 | 245 | 14 | 7 | 259 |
| | | styrene | | | | 14 | 7 | |
| | | tetrahydrofurfuryl acrylate | | | | 7 | 14 | |
| | | 2-methoxyethyl acrylate | 126 | 7 | | 14 | 35 | |
| | | 2-methoxyethyl methacrylate | | 7 | | 14 | 28 | |
| | | methoxy polyethylene glycol methacrylate | | 14 | | 14 | 35 | |
| | | 2- (2-ethoxyethoxy) ethyl acrylate | | 7 | | 14 | 35 | |
| | | triisopropylsilyl methacrylate | | | | 245 | 350 | |
| | | trisopropylsilyl acrylate | | | | 7 | 14 | |
| | | silicone modified acrylate (MN = 1000) | | 35 | | 56 | 35 | |
| | | silicone modified acrylate (MN = 10000) | | 35 | | 7 | 7 | |
| alkoxysilyl group-containing chain transfer agent | | 3-mercaptopropylmethyldimethoxysilane | | | | 3.5 | 7 | |
| | | 3-mercaptopropyltrimethoxysilane | 28 | 7 | 7 | 3.5 | 21 | 7 |
| solvent in dropping funnel | | xylene (containing ethylbenzene) | 30 | 30 | 30 | 30 | 30 | 30 |
| polymerization initiator | initial addition | 1,1,3,3-tetramethylabutyl peroxy-2-ethylhexanoate | 7.8 | 6.5 | 7.8 | 7.8 | 7.8 | 5.0 |
| | added later 3 times | | 0.3 each | 0.3 each | 0.3 each | 0.3 each | 0.3 each | 0.3 each |
| dilution solvent | | xylene (containing ethylbenzene) | 10 | 10 | 10 | 10 | 10 | 10 |
| reaction temperature [°C] (within the range of ± 5 °C) | | | 100 | 100 | 100 | 100 | 100 | 90 |
| properties of copolymer solution | | heating residue [%] | 70.1 | 69.4 | 70.2 | 70.7 | 70.9 | 70.5 |
| | | weight average molecular weight [Mw] | 12400 | 24300 | 23200 | 22100 | 13600 | 29200 |
| name of copolymer solution | | | A7 | A8 | A9 | A10 | A11 | A12 |

**[Table 3]**

| Table 3 | | | Production Example | | | | | |
|---|---|---|---|---|---|---|---|---|
| | | | 13 | 14 | 15 | 16 | 17 | 18 |
| initial solvent | | xylene (containing ethylbenzene) | 260 | 260 | 260 | 260 | 260 | 260 |
| alkoxysilyl group-containing monomer | | p-styrryltrimethoxysilane | | | | | 7 | |
| | | 3-methacryloxypropyltrimethoxysilane | 14 | 14 | 7 | 7 | 7 | 7 |
| | | 3-methacryloxypropyltriethoxysilane | | | | 7 | | |
| | | methacryloxyoctyltrimethoxysilane | | | | | | 7 |
| | | 3-methacryloxymethyltrimethoxysilane | | | 7 | | | |
| monomer(a) branched | | isodecyl acrylate | 70 | | | | | |
| | | 2-propylheptyl acrylate | | 70 | | | | |
| | | tridecyl methacrylate | | | 91 | | | |
| | | isostearyl acrylate | | | | 119 | 70 | 161 |
| monomer(b) | | n-butyl acrylate | 378 | 378 | 343 | 350 | 357 | 308 |
| | | methyl methacrylate | 231 | 231 | 245 | 210 | 252 | 210 |
| alkoxysilyl group-containing chain transfer agent | | 3-mercaptopropyltrimethoxysilane | 7 | 7 | 7 | 7 | 7 | 7 |
| solvent in dropping funnel | | xylene (containing ethylbenzene) | 30 | 30 | 30 | 30 | 30 | 30 |
| polymerization initiator | initial addition | 1,1,3,3-tetramethylabutyl peroxy-2-ethylhexanoate | 7.8 | 7.8 | 3.9 | 5.0 | 2.0 | 4.2 |
| | added later 3 times | | 0.3 each | 0.3 each | 0.3 each | 0.3 each | 0.3 each | 0.3 each |
| dilution solvent | | xylene (containing ethylbenzene) | 10 | 10 | 10 | 10 | 10 | 10 |
| reaction temperature [°C] (within the range of ± 5 °C) | | | 100 | 100 | 100 | 90 | 90 | 85 |
| properties of copolymer solution | | heating residue [%] | 69.7 | 70.0 | 69.3 | 70.8 | 69.3 | 69.4 |
| | | weight average molecular weight [Mw] | 23600 | 23800 | 30600 | 26800 | 33100 | 31200 |
| name of copolymer solution | | | A13 | A14 | A15 | A16 | A17 | A18 |

**[Table 4]**

| Table 4 | | | Production Example | | | | | |
|---|---|---|---|---|---|---|---|---|
| | | | 19 | 20 | 21 | 22 | 23 | 24 |
| initial solvent | | xylene (containing ethylbenzene) | 260 | 200 | 200 | 200 | 200 | 200 |
| alkoxysilyl group-containing | | 3-methacryloxypropyltrimethoxysilane | 14 | 98 | 77 | 140 | 161 | 7 |
| monomer(a) branched | | issonyl acrylate | | | | | | 70 |
| monomer(a) linear chain | | N-octyl acrylic acid | 14 | | | | | |
| | | lauryl acrylate | 14 | | | | | |
| | | lauryl methacrylate | 14 | 119 | 350 | 112 | 112 | |
| | | stearyl acrylate | 14 | | | | | |
| | | stearyl methacrylate | 14 | | | | | |
| monomer(b) | | n-butyl acrylate | 385 | 315 | 63 | 301 | 315 | 371 |
| | | methyl methacrylate | 224 | 154 | 196 | 133 | 98 | 238 |
| alkoxysilyl group-containing chain transfer agent | | 3-mercaptopropyltrimethoxysilane | 7 | 14 | 14 | 14 | 14 | 14 |
| solvent in dropping funnel | | xylene (containinq ethylbenzene) | 30 | 30 | 30 | 30 | 30 | 30 |
| polymerization initiator | initial addition | 1,1,3,3-tetramethylabutyl peroxy-2-ethylhexanoate | 2.0 | | | | | |
| | added later 3 times | | 0.3 each | | | | | |
| | initial addition | 1,1-bis (1,1-dimethylethyl peroxy) cyclohexane | | 2.0 | 2.0 | 2.0 | 2.0 | 2.0 |
| | added later 3 times | | | 0.3 each | 0.3 each | 0.3 each | 0.3 each | 0.3 each |
| dilution solvent | | xylene (containing ethylbenzene) | 10 | 70.0 | 70.0 | 70.0 | 70.0 | 70.0 |
| reaction temperature [°C] (within the range of ± 5 °C) | | | 100 | 115 | 115 | 115 | 115 | 115 |
| properties of copolymer solution | | heating residue [%] | 69.6 | 69.8 | 71.9 | 70.0 | 69.8 | 69.4 |
| | | weight average molecular weight [Mw] | 27400 | 20500 | 17200 | 21400 | 26900 | 19400 |
| name of copolymer solution | | | A19 | A20 | A21 | A22 | A23 | A24 |

**[Table 5]**

| Table 5 | | | Production Example | | | | | |
|---|---|---|---|---|---|---|---|---|
| | | | 25 | 26 | 27 | 28 | 29 | 30 |
| initial solvent | | xylene (containing ethylbenzene) | 260 | 160 | 200 | 160 | 200 | 200 |
| | | n-butanol | | 40 | | 40 | | |
| alkoxysilyl group-containing monomer | | 3-methacryloxypropyltrimethoxysilane | | 7 | | 7 | 7 | 7 |
| | | 3-methacryloxypropylmethyldiethoxysilane | | | 1.4 | | | |
| | | methacryloxyoctyltrimethoxysilane | 7 | | 5.6 | | | |
| monomer(a) branched | | 2-ethylhexyl acrylate | | | | 21 | 77 | |
| | | issonyl acrylate | 70 | 98 | 112 | 21 | | |
| | | isodecyl acrylate | | | | 21 | | 70 |
| | | izodecyl methacrylate | | | | 21 | | |
| | | 2-propylheptyl acrylate | | | | 21 | | |
| | | tridecyl methacrylate | | | | 21 | | |
| | | isostearyl acrylate | | | | 21 | | |
| monomer(b) | | n-butyl acrylate | | 280 | 308 | 126 | 350 | 378 |
| | | methyl methacrylate | 469 | 196 | 238 | 14 | 252 | 231 |
| | | styrene | | | 21 | 14 | | |
| | | tetrahydrofurfuryl acrylate | | | | 7 | | |
| | | 2-methoxyethyl acrylate | 126 | 7 | | 14 | | |
| | | 2-methoxyethyl methacrylate | | 7 | | 14 | | |
| | | methoxy polyethylene glycol methacrylate | | 14 | | 14 | | |
| | | 2- (2-ethoxyethoxy) ethyl acrylate | | 7 | | 14 | | |
| | | triisopropylsilyl methacrylate | | | | 245 | | |
| | | trisopropylsilyl acrylate | | | | 7 | | |
| | | silicone modified acrylate (MN = 1000) | | 35 | | 56 | | |
| | | silicone modified acrylate (MN = 10000) | | 35 | | 7 | | |
| alkoxysilyl group-containing chain transfer agent | | 3-mercaptopropylmethyldimethoxysilane | | | | 7 | | |
| | | 3-mercaptopropyltrimethoxysilane | 28 | 14 | 14 | 7 | 14 | 14 |
| solvent in dropping funnel | | xylene (containing ethylbenzene) | 30 | 30 | 30 | 30 | 30 | 30 |
| polymerization initiator | initial addition | 1,1-bis (1,1-dimethylethyl peroxy) cyclohexane | 2.0 | 2.0 | 2.0 | 2.0 | 2.0 | 2.0 |
| | added later 3 times | | 0.3 each | 0.3 each | 0.3 each | 0.3 each | 0.3 each | 0.3 each |
| dilution solvent | | xylene (containing ethylbenzene) | 10.0 | 70.0 | 70.0 | 70.0 | 70.0 | 70.0 |
| reaction temperature [°C] (within the range of ± 5 °C) | | | 115 | 115 | 115 | 115 | 115 | 115 |
| properties of copolymer solution | | heating residue [%] | 71.2 | 69.0 | 69.2 | 70.3 | 70.2 | 70.1 |
| | | weight average molecular weight [Mw] | 9100 | 21500 | 20900 | 21700 | 22200 | 23200 |
| name of copolymer solution | | | A25 | A26 | A27 | A28 | A29 | A30 |

**[Table 6]**

| Table 6 | | | Production Example | | | | | |
|---|---|---|---|---|---|---|---|---|
| | | | 31 | 32 | 33 | 34 | 35 | 36 |
| initial solvent | | xylene (containing ethylbenzene) | 200 | 180 | 200 | 200 | 260 | 200 |
| alkoxysilyl group-containing monomer | | p-styrryltrimethoxysilane | | | | 3.5 | | |
| | | 3-methacryloxypropyltrimethoxysilane | 7 | 3.5 | 3.5 | 3.5 | 3.5 | 7 |
| | | 3-methacryloxypropylmethyldiethoxysilane | | | 3.5 | | | |
| | | methacryloxyoctyltrimethoxysilane | | | | | 3.5 | |
| | | 3-methacryloxymethyltrimethoxysilane | | 3.5 | | | | |
| monomer(a) branched | | 2-propylheptyl acrylate | 70 | | | | | |
| | | tridecyl methacrylate | | 91 | | | | |
| | | isostearyl acrylate | | | 119 | 70 | 161 | |
| monomer(a) linear chain | | N-octyl acrylic acid | | | | | | 14 |
| | | lauryl acrylate | | | | | | 14 |
| | | lauryl methacrylate | | | | | | 14 |
| | | stearyl acrylate | | | | | | 14 |
| | | stearyl methacrylate | | | | | | 14 |
| monomer(b) | | n-butyl acrylate | 378 | 343 | 350 | 357 | 308 | 385 |
| | | methyl methacrylate | 231 | 245 | 210 | 252 | 210 | 224 |
| alkoxysilyl group-containing chain transfer agent | | 3-mercaptopropyltrimethoxysilane | 14 | 14 | 14 | 14 | 14 | 14 |
| solvent in dropping funnel | | xylene (containina ethylbenzene) | 30 | 30 | 30 | 30 | 30 | 30 |
| polymerization initiator | initial addition | 1,1-bis (1,1-dimethylethyl peroxy) cyclohexane | 2.0 | 2.0 | 2.0 | 2.0 | 8.0 | 2.0 |
| | added later 3 times | | 0.3 each | 0.3 each | 0.3 each | 0.3 each | 0.3 each | 0.3 each |
| dilution solvent | | xylene (containing ethylbenzene) | 70.0 | 70.0 | 70.0 | 70.0 | 10.0 | 70.0 |
| | | 2-methoxy-1-methylethyl acetate | | 20 | | | | |
| reaction temperature [°C] (within the range of ± 5 °C) | | | 115 | 115 | 115 | 115 | 130 | 115 |
| properties of copolymer solution | | heating residue [%] | 69.3 | 69.0 | 70.2 | 69.1 | 71.3 | 70.8 |
| | | weight average molecular weight [Mw] | 22800 | 20800 | 20600 | 21800 | 11700 | 22600 |
| name of copolymer solution | | | A31 | A32 | A33 | A34 | A35 | A36 |

**[Table 7]**

| Table 7 | | | Production Example | | | | | |
|---|---|---|---|---|---|---|---|---|
| | | | 37 | 38 | 39 | 40 | 41 | 42 |
| initial solvent | | xylene (containing ethylbenzene) | 260 | 210 | 260 | 210 | 260 | 260 |
| | | n-butanol | | 50 | | 50 | | |
| alkoxysilyl group-containing monomer | | 3-methacryloxypropyltrimethoxysilane | 7 | 7 | 3.5 | | 7 | 7 |
| | | methacryloxyoctyltrimethoxysilane | | | 3.5 | | | |
| monomer(a) branched | | 2-ethylhexyl acrylate | | | | 7 | 84 | |
| | | issonyl acrylate | 70 | 70 | 105 | 14 | | |
| | | isodecyl acrylate | | | | 7 | | 70 |
| | | izodecyl methacrylate | | | | 7 | | |
| | | 2-propylheptyl acrylate | | | | 7 | | |
| | | tridecyl methacrylate | | | | 14 | | |
| | | isostearyl acrylate | | | | 14 | | |
| monomer(b) | | n-butyl acrylate | 385 | 294 | 343 | 35 | 336 | 378 |
| | | methyl methacrylate | 210 | 196 | 217 | 7 | 245 | 217 |
| | | styrene | | | | 7 | | |
| | | tetrahydrofurfuryl acrylate | | | | 7 | | |
| | | 2-methoxyethyl acrylate | | 7 | | 35 | | |
| | | 2-methoxyethyl methacrylate | | 7 | | 35 | | |
| | | methoxy polyethylene glycol methacrylate | | 14 | | 35 | | |
| | | 2- (2-ethoxyethoxy) ethyl acrylate | | 7 | | 35 | | |
| | | triisopropylsilyl methacrylate | | | | 350 | | |
| | | trisopropylsilyl acrylate | | | | 14 | | |
| | | silicone modified acrylate (MN = 1000) | | 35 | | 35 | | |
| | | silicone modified acrylate (MN = 10000) | | 35 | | 7 | | |
| alkoxysilyl group-containing chain transfer agent | | 3-mercaptopropylmethyldimethoxysilane | | | | 14 | | |
| | | 3-mercaptopropyltrimethoxysilane | 28 | 28 | 28 | 14 | 28 | 28 |
| solvent in dropping funnel | | xylene (containing ethylbenzene) | 18 | 21 | 18 | 18 | 20 | 25 |
| polymerization initiator | initial addition | 2,2-bis (4,4-di-t-butyl paoxycyclohexyl) propane | 19.0 | 16.0 | 19.0 | 19.0 | 17.0 | 12.0 |
| | added later 3 times | | 1 each | 1 each | 1 each | 1 each | 1 each | 1 each |
| reaction temperature [°C] (within the range of ± 5 °C) | | | 115 | 115 | 115 | 115 | 115 | 108 |
| properties of copolymer solution | | heating residue [%] | 71.6 | 70.5 | 70.3 | 70.0 | 71.5 | 71.6 |
| | | weight average molecular weight [Mw] | 26200 | 26900 | 25900 | 23100 | 27200 | 28600 |
| name of copolymer solution | | | A37 | A38 | A39 | A40 | A41 | A42 |

**[Table 8]**

| Table 8 | | | Production Example | | | | |
|---|---|---|---|---|---|---|---|
| | | | 43 | 44 | 45 | 46 | 47 |
| initial solvent | | xylene (containing ethylbenzene) | 260 | 200 | 260 | 260 | 265 |
| alkoxysilyl group-containing monomer | | p-styrryltrimethoxysilane | | | | 3.5 | |
| | | 3-methacryloxypropyltrimethoxysilane | 7 | 3.5 | 3.5 | 3.5 | 3.5 |
| | | 3-methacryloxypropylmethyldiethoxysilane | | | 3.5 | | |
| | | methacryloxyoctyltrimethoxysilane | | | | | 3.5 |
| | | 3-methacryloxymethyltrimethoxysilane | | 3.5 | | | |
| monomer(a) branched | | 2-propylheptyl acrylate | 70 | | | | |
| | | tridecyl methacrylate | | 91 | | | |
| | | isostearyl acrylate | | | 119 | 70 | 161 |
| monomer(b) | | n-butyl acrylate | 378 | 343 | 350 | 357 | 308 |
| | | methyl methacrylate | 217 | 231 | 196 | 238 | 196 |
| alkoxysilyl group-containing chain transfer agent | | 3-mercaptopropyltrimethoxysilane | 28 | 28 | 28 | 28 | 28 |
| solvent in dropping funnel | | xylene (containing ethylbenzene) | 24 | 24 | 25 | 17 | 22 |
| polymerization initiator | initial addition | 2,2-bis (4,4-di-t-butyl paoxycyclohexyl) propane | 13.0 | 5.0 | 12.0 | 5.0 | 10.0 |
| | added later 3 times | | 1 each | 1 each | 1 each | 1 each | 1 each |
| dilution solvent | | xylene (containing ethylbenzene) | | 48.0 | | 15.0 | |
| | | 2-methoxy-1-methylethyl | | 20 | | | |
| reaction temperature [°C] (within the range of ± 5 °C) | | | 115 | 105 | 105 | 105 | 105 |
| properties of copolymer solution | | heating residue [%] | 71.5 | 70.2 | 71.6 | 70.7 | 72.9 |
| | | weight average molecular weight [Mw] | 28300 | 32200 | 29600 | 34000 | 15800 |
| name of copolymer solution | | | A43 | A44 | A45 | A46 | A47 |

**[Table 9]**

| Table 9 | | | Production Example | | | | | |
|---|---|---|---|---|---|---|---|---|
| | | | 48 | 49 | 50 | 51 | 52 | 53 |
| initial solvent | | xylene (containing ethylbenzene) | 260 | 260 | 200 | 200 | 260 | 260 |
| monomer(a) branched | | issonyl acrylate | 70 | 105 | 70 | 105 | 70 | 105 |
| monomer(b) | | n-butyl acrylate | 21 | 315 | 21 | 315 | 35 | 315 |
| | | methyl methacrylate | 7 | 224 | 7 | 224 | 14 | 224 |
| | | styrene | 7 | | 7 | | 7 | |
| | | tetrahydrofurfuryl acrylate | 7 | | 7 | | 7 | |
| | | 2-methoxyethyl acrylate | 147 | 35 | 154 | 35 | 140 | 35 |
| | | 2-methoxyethyl methacrylate | 21 | | 21 | | 21 | |
| | | methoxy polyethylene glycol methacrylate | 14 | | 14 | | 14 | |
| | | 2-(2-ethoxyethoxy)ethyl acrylate | 21 | | 21 | | 21 | |
| | | 4-hydroxybutyl acrylate | 14 | 14 | 7 | 7 | 308 | |
| | | methacrylic acid polypropylene glycol | 14 | | 7 | | 14 | |
| | | triisopropylsilyl methacrylate | 308 | | 308 | | 21 | |
| | | trisopropylsilyl acrylate | 14 | | 14 | | 7 | |
| | | silicone modified acrylate (MN = 1000) | 21 | | 21 | | 21 | 21 |
| | | silicone modified acrylate (MN = 10000) | 7 | | 7 | | 30 | 30 |
| chain transfer agent | | 3-mercapto-1-propanol | 7 | 7 | 14 | 14 | | |
| solvent in dropping funnel | | xylene (containing ethylbenzene) | 30 | 30 | 30 | 30 | | |
| polymerization initiator | initial addition | 1,1,3,3-tetramethylabutyl peroxy-2-ethylhexanoate | 2.2 | 3 | | | | |
| | added later 3 times | | 0.3 each | 0.3 each | | | | |
| | initial addition | 1,1-bis (1,1-dimethylethyl peroxy) cyclohexane | | | 2 | 2 | | |
| | added later 3 times | | | | 0.3 each | 0.3 each | | |
| | initial addition | 2,2-bis (4,4-di-t-butyl paoxycyclohexyl) propane | | | | | 5.5 | 7 |
| | added later 3 times | | | | | | 0.3 each | 0.3 each |
| dilution solvent | | 2-methoxy-1-methylethyl acetate | 10 | 10 | 70 | 70 | 10 | 10 |
| alkoxysilyl compounds | | 3-isocyanate propyltrimethoxysilane | 45 | 38 | 45 | 41 | 64 | 64 |
| reaction temperature [°C] (within the range of ± 5 °C) | | | 88 | 100 | 115 | 115 | 103 | 115 |
| properties of copolymer solution | | heating residue [%] | 72.1 | 72.5 | 73.1 | 73.3 | 74.8 | 73.6 |
| | | weight average molecular weight [Mw] | 17800 | 15900 | 19600 | 16100 | 27300 | 23900 |
| name of copolymer solution | | | A48 | A49 | A50 | A51 | A52 | A53 |

**[Table 10]**

| Table 10 | | | Production Example | |
|---|---|---|---|---|
| | | | 54 | 55 |
| initial solvent | | xylene (containing ethylbenzene) | 260 | 260 |
| alkoxysilyl group-containing monomer | | 3-methacryloxypropyltrimethoxysilane | 7 | 14 |
| | | methacryloxyoctyltrimethoxysilane | 7 | |
| monomer(a) branched | | 2-ethylhexylic acid vinyl ester | | 105 |
| | | versatile 9 acid vinyl ester | | 70 |
| | | neodecanoic acid vinyl ester | 105 | |
| monomer(b) | | n-butyl acrylate | 385 | 315 |
| | | methyl methacrylate | 189 | 189 |
| alkoxysilyl group-containing chain transfer agent | | 3-mercaptopropyltrimethoxysilane | 7 | 7 |
| solvent in dropping funnel | | xylene (containing ethylbenzene) | 30 | 30 |
| polymerization initiator | initial addition | 1,1,3,3-tetramethylabutyl peroxy-2-ethylhexanoate | 7.8 | 7.8 |
| | added later 3 times | | 0.3 each | 0.3 each |
| dilution solvent | | xylene (containing ethylbenzene) | 10 | 10 |
| reaction temperature | | [°C] (within the range of ± 5 °C) | 100 | 100 |
| properties of copolymer solution | | heating residue [%] | 69.4 | 69.2 |
| | | weight average molecular weight [Mw] | 20400 | 21200 |
| name of copolymer solution | | | A54 | A55 |

**[Table 11]**

| Table 11 | | | Production Example | | | | | | |
|---|---|---|---|---|---|---|---|---|---|
| | | | 56 | 57 | 58 | 59 | 60 | | 61 |
| initial solvent | | xylene (containing ethylbenzene) | 270 | 270 | 270 | 270 | 270 | | 270 |
| alkoxysilyl group-containing monomer | | 3-methacryloxypropyltrimethoxysilane | 14 | 14 | 14 | 14 | 14 | | 14 |
| monomer(a) branched | | issonyl acrylate | 105 | 35 | 35 | 105 | 35 | | 35 |
| monomer(b) | | n-butyl acrylate | 344 | 410 | 445 | 372 | 445 | | 452 |
| | | methyl methacrylate | 160 | 164 | 165 | 168 | 165 | | 165 |
| | | 2- (2-ethoxyethoxy) ethyl acrylate | 70 | | | | | | |
| | | tetrahydrofurfuryl acrylate | | 70 | | | | | |
| | | 2-methoxyethyl acrylate | | | 35 | | | | |
| | | methoxy polyethylene glycol methacrylate(n=2) | | | | 21 | | | |
| | | methoxy polyethylene glycol acrylate(n= 9) | | | | | 35 | | 14 |
| | | methoxy polyethylene glycol methacrylate(n=23) | | | | 14 | | | |
| | | silicone modified acrylate(Mn=5000) | | | | | | | 14 |
| alkoxysilyl group-containing chain transfer agent | | 3-mercaptopropyltrimethoxysilane | 7 | 7 | 6 | 6 | 6 | | 6 |
| solvent in dropping funnel | | xylene (containing ethylbenzene) | 10 | 10 | 10 | 10 | 10 | | 10 |
| polymerization initiator | initial addition | 1,1,3,3-tetramethylabutyl peroxy-2-ethylhexanoate | 6.5 | 5.5 | 5.3 | 7.0 | 5.5 | | 6.0 |
| | added later 3 times | | 0.2 each | 0.2 each | 0.2 each | 0.2 each | 0.2 each | | 0.2 each |
| dilution solvent | | xylene (containing ethylbenzene) | 11.0 | 11.0 | 11.0 | 20.0 | 20.0 | | 11.0 |
| reaction temperature [°C] (within the range of ± 5 °C) | | | 103 | 103 | 103 | 103 | 103 | | 103 |
| properties of copolymer solution | | heating residue [%] | 69.9 | 69.8 | 69.6 | 68.6 | 69.0 | | 69.3 |
| | | weight average molecular weight [Mw] (×10⁻³) | 23.0 | 24.2 | 24.3 | 20.8 | 21.4 | | 23.0 |
| name of copolymer solution | | | A56 | A57 | A58 | A59 | A60 | | A61 |

**[Table 12]**

| Table 12 | | | Production Example | | |
|---|---|---|---|---|---|
| | | | 62 | 63 | 64 |
| initial solvent | | xylene (containing ethylbenzene) | 270 | 270 | 270 |
| alkoxysilyl group-containing monomer | | 3-methacryloxypropyltrimethoxysilane | 14 | 14 | 21 |
| monomer(a) | | issonyl acrylate | 35 | 35 | 105 |
| | | octoxic polyethylene glycol polypropylene glycol methacrylate | | 70 | |
| | | nonylphenoxy polyethylene glycol polypropylene glycol acrylate | | | 70 |
| monomer(b) | | n-butyl acrylate | 469 | 407 | 340 |
| | | methyl methacrylate | 161 | 168 | 161 |
| | | glycerin monomethallate | 14 | | |
| alkoxysilyl group-containing chain transfer agent | | 3-mercaptopropyltrimethoxysilane | 7 | 6 | 4 |
| solvent in dropping funnel | | xylene (containing ethylbenzene) | 10 | 10 | 10 |
| polymerization initiator | initial addition | 1,1,3,3-tetramethylabutyl peroxy-2-ethylhexanoate | 6.0 | 5.5 | 8.0 |
| | added later 3 times | | 0.2 each | 0.2 each | 0.2 each |
| dilution solvent | | xylene (containing ethylbenzene) | 20.0 | 11.0 | 20.0 |
| reaction temperature [°C] (within the range of ± 5 °C) | | | 103 | 103 | 103 |
| properties of copolymer solution | | heating residue [%] | 69.2 | 69.4 | 69.2 |
| | | weight average molecular weight (Mw) (×10⁻³) | 22.3 | 21.9 | 28.5 |
| name of copolymer solution | | | A62 | A63 | A64 |

**[Table 13]**

| Table 13 | | | Production Example | |
|---|---|---|---|---|
| | | | 65 | 66 |
| initial solvent | | xylene (containing ethylbenzene) | 270 | 270 |
| alkoxysilyl group-containing monomer | | 3-methacryloxypropyltrimethoxysilane | 14 | 14 |
| monomer(a) | | issonyl acrylate | 35 | 105 |
| monomer(b) | | n-butyl acrylate | 410 | 383 |
| | | methyl methacrylate | 165 | 164 |
| | | 2-methoxyethyl acrylate | 70 | |
| | | methoxy polyethylene glycol methacrylate(n= 9) | | 14 |
| | | silicone modified acrylate(Mn=2500) | | 14 |
| alkoxysilyl group-containing chain transfer agent | | 3-mercaptopropyltrimethoxysilane | 6 | 6 |
| solvent in dropping funnel | | xylene (containing ethylbenzene) | 10 | 10 |
| polymerization initiator | initial addition | 2,2'-azobis (2-methylbutyronitrile) | 9.0 | 18.0 |
| | added later 3 times | t-butyl peroxy-2-ethylhexanoate | 0.2 each | 0.2 each |
| dilution solvent | | xylene (containing ethylbenzene) | 111.0 | 11.0 |
| reaction temperature [°C] (within the range of ± 5 °C) | | | 103 | 103 |
| properties of copolymer solution | | heating residue [%] | 69.3 | 70.3 |
| | | weight average molecular weight [Mw] (×10⁻³) | 23.7 | 20.9 |
| name of copolymer solution | | | A65 | A66 |

The details of each component in the above production example are as follows.
xylene (containing ethylbenzene): reagent, containing 5 to 70% of ethylbenzene by weight, available from TOKYO CHEMICAL INDUSTRY CO., LTD.
methoxy polyethylene glycol methacrylate: reagent, Mn= about 500, available from Sigma-Aldrich, Inc.
silicon modified acrylate (Mn=1000): product name "Silaplane FM-0711", available from JNC CORPORATION
silicon modified acrylate (Mn=10000): product name "Silaplane FM-0725", available from JNC CORPORATION
polypropylene glycol methacrylate: product name "BLEMMER PP-1000", available from NOF CORPORATION
2-ethylhexylate vinyl ester: product name "VeoVa E H", available from Hexion Inc. versatic 9 acid vinyl ester: product name "VeoVa 9", available from Hexion Inc. neodecanoic acid vinyl ester: product name "VeoVa 10", available from Hexion Inc.
methoxy polyethylene glycol methacrylate (n=2): product name " BLEMMER PME-100", available from NOF CORPORATION
methoxy polyethylene glycol acrylate (n≈9): product name "BLEMMER AME-400", available from NOF CORPORATION
methoxy polyethylene glycol methacrylate (n≈23): product name " BLEMMER PME-1000", available from NOF CORPORATION
Silicone modified acrylate (Mn=5000): product name "Silaplane FM-0721", available from JNC CORPORATION
octoxypolyethylene glycol polypropylene glycol methacrylate: product name "BLEMMER 50POEP-800B, available from NOF CORPORATION
nonylphenoxy polyethylene glycol polypropylene glycol acrylate: product name "BLEMMER 75ANEP-600", available from NOF CORPORATION
glycerol monomethacrylate: product name "BLEMMER GLM", available from NOF CORPORATION

### 2. Examples and Comparative Examples

The antifouling coating compositions of the examples and Comparative Examples (Examples 1 to 4, 30 to 34 and 53) were prepared according to the formulations shown in Table 14 to Table 28.

**[Table 14]**

| Table 14 | | | Example | | | | | | | |
|---|---|---|---|---|---|---|---|---|---|---|
| | | | 1 | 2 | 3 | 4 | 5 | 6 | 7 | 8 |
| | copolymerA | A1 | 62 | | | | | | | |
| | | A2 | | 62 | | | | | | |
| | | A3 | | | 62 | | | | | |
| | | A4 | | | | 62 | | | | |
| | | A5 | | | | | 62 | 73 | 62 | 62 |
| | anti-tarring agent | polyamide wax | 1 | 1 | 1 | 1 | 1 | 1 | 1 | 1 |
| | | polyethylene oxide | 0.5 | 0.5 | 0.5 | 0.5 | 0.5 | 0.5 | 0.5 | 0.5 |
| | pigment | red iron oxide | 3 | 3 | 3 | 3 | 3 | 3 | | 3 |
| | | titanium oxide | | | | | | | 3 | |
| | | silica | 0.5 | 0.5 | 0.5 | 0.5 | 0.5 | 0.5 | 0.5 | 0.5 |
| | additive | copper pyrithione | 4 | 4 | 4 | 4 | 4 | 4 | | 8 |
| | | zinc pyrithione | 0.5 | 0.5 | 0.5 | 0.5 | 0.5 | 0.5 | 2 | |
| | | cuprous oxide | 0.5 | 0.5 | 0.5 | 0.5 | 0.5 | 0.5 | | |
| | | tralopyril | 0.5 | 0.5 | 0.5 | 0.5 | 0.5 | 0.5 | 5 | |
| | | DCOIT (30% solution) | 0.5 | 0.5 | 0.5 | 0.5 | 0.5 | 0.5 | 1 | |
| liquid a | | medetomidine | 0.1 | 0.1 | 0.1 | 0.1 | 0.1 | 0.1 | | |
| | | thiocyanate copper | 0.5 | 0.5 | 0.5 | 0.5 | 0.5 | 0.5 | | |
| | | tolylfluanid | 0.5 | 0.5 | 0.5 | 0.5 | 0.5 | 0.5 | | |
| | | Zineb | 0.5 | 0.5 | 0.5 | 0.5 | 0.5 | 0.5 | | |
| | | Diuron | 0.5 | 0.5 | 0.5 | 0.5 | 0.5 | 0.5 | | |
| | plasticizer | paraffin mineral oil | 1 | 1 | 1 | 1 | 1 | 1 | 1 | 1 |
| | | polybutene | 1 | 1 | 1 | 1 | 1 | 1 | 1 | 1 |
| | | chlorinated paraffin | 1 | 1 | 1 | 1 | 1 | 1 | 1 | 1 |
| | | methylphenylpolysiloxane | 1 | 1 | 1 | 1 | 1 | 1 | 1 | 1 |
| | solvent | xylene (containing ethylbenzene) | 4 | 4 | 4 | 4 | 4 | 4 | 4 | 4 |
| | | low-boiling point aromatic naphtha | 1 | | | | 1 | 1 | 1 | 1 |
| | | white spirits | | 1 | | | | | | |
| | | naphthene based hydrocarbon | | | 1 | | | | | |
| | | paraffin based hydrocarbon | | | | 1 | | | | |
| | total of liquid a | | 84.1 | 84.1 | 84.1 | 84.1 | I 84.1 | 95.1 | 84 | 84 |
| | curing catalyst | 1-amino-2-ethylhexane | | 0.3 | 0.2 | 0.3 | | | | |
| | | 3-(trimethoxysilyl) propylamine | | 0.3 | | | | | | |
| | | N-2-aminoethyl-3-aminopropyltrimethoxysilane | | | 0.2 | | | | | |
| | | N,N,N',N'-tetramethyl-N"-[3-(trimethoxysilyl)propyl]guanidine | | | 0.2 | | | | | |
| | | 3-triethoxysi Iyl-N-(1,3-dimethylbutylidene) propylamine | | | | 0.3 | | | | |
| | | neodecanoic acid | | 1.0 | 1 | 1 | | | | |
| | | di-n-butyltin dilaurate | 1 | | | | | | | |
| | | diisopropoxybis (ethylacetoacetate) titanium | | | | | 1 | 1 | 1 | 1 |
| | bleeding oil | polyglicoside alkyl modified silicone oil | | | | | 1 | | | |
| | | polyglycerin alkyl modified silicone oil | | | | | 1 | | | |
| | | both terminal polyglycerol modified silicone oil | | | | | 1 | | | |
| | | polyether modified polysiloxane 1 | 3 | 3 | 3 | 3 | 1 | | 3 | 3 |
| | | polyether modified polysiloxane 2 | 7 | 7 | 7 | 7 | 1 | | 7 | 7 |
| | | polyether modified polysiloxane 3 | 1 | 1 | 1 | 1 | 1 | | 1 | 1 |
| | | both terminal polyether modified polysiloxane | | | | | 1 | | | |
| liquid b | | alkyl modified silicone oil | | | | | 1 | | | |
| | | polyoxyethylene (30) lanolin | | | | | 1 | | | |
| | | polyoxyethylene (40) castor oil | | | | | 1 | | | |
| | | modified perfluoropolyether oil | | | | | 1 | | | |
| | solvent | acetyl acetone | | 1 | | | 1 | 1 | 1 | 1 |
| | | dipropylene glycol | | | 1 | | | | | |
| | | diethylene glycol monobutyl ether | 1 | | | 1 | | | | |
| | | xylene (containina ethylbenzene) | 2.9 | 2.3 | 2.3 | 2.3 | 2.9 | 2.9 | 3.0 | 3.0 |
| | total of liquid b | | 15.9 | 15.9 | 15.9 | 15.9 | 15.9 | 1 4.9 | 16 | 16 |
| liquid a + liquid b | | | 100.0 | 100.0 | 100.0 | 100.0 | 100.0 | 100.0 | 100.0 | 100.0 |
| evaluation | adhesiveness test | | A | A | A | A | A | A | A | \| A |
| | antifouling test | 6 months | AA | AA | AA | AA | AA | AA | AA | AA |
| | | 12 months | AA | AA | A | B | AA | AA | AA | AA |
| | | 24 months | A | B | C | C | AA | AA | AA | AA |
| | | 36 months | C | C | C | C | AA | AA | AA | AA |

**[Table 15]**

| Table 15 | | | Example | | | | | | | |
|---|---|---|---|---|---|---|---|---|---|---|
| | | | 9 | 10 | 11 | 12 | 13 | 14 | 15 | 16 |
| | copolymerA | A5 | 62 | 62 | | 44 | | | | |
| | | A6 | | | 56 | | | | | |
| | | A7 | | | | 18 | | | | |
| | | A8 | | | | | 56 | | | |
| | | A9 | | | | | | 56 | | |
| | | A10 | | | | | | | 62 | 73 |
| | other resins | polyorganosiloxane with silanol groups at the end | | | | | 2.1 | | | |
| | | polypropylene glycol | | | | | 2 | | | |
| | | polyester polyol | | | 2.1 | | | | | |
| | | chlorinated polyolefin, 41% chlorine content | | | 1 | | | | | |
| | | chlorinated ethylene vinyl acetate copolymer | | | 1 | | | | | |
| liquid a | | bisphenol A epoxy resin | | | | | | 4.1 | | |
| | anti-tarring agent | polyamide wax | 1 | 1 | 1 | 1 | 1 | 1 | 1 | 1 |
| | | polyethylene oxide | 0.5 | 0.5 | 0.5 | 0.5 | 0.5 | 0.5 | 0.5 | 0.5 |
| | pigment | red iron oxide | | 1 | 3 | 3 | 3 | 3 | 3 | 3 |
| | | titanium oxide | 3 | | | | | | | |
| | | silica | | 0.5 | 0.5 | 0.5 | 0.5 | 0.5 | 0.5 | 0.5 |
| | additive | copper pyrithione | | 2 | 4 | 8 | 4 | 4 | 4 | 4 |
| | | zinc pyrithione | 2 | | 0.5 | | 0.5 | 0.5 | 0.5 | 0.5 |
| | | cuprous oxide | | 5 | 0.5 | | 0.5 | 0.5 | 0.5 | 0.5 |
| | | tralopyril | | | 0.5 | | 0.5 | 0.5 | 0.5 | 0.5 |
| | | DCOIT (30% solution) | 2 | 2.9 | 0.5 | | 0.5 | 0.5 | 0.5 | 0.5 |
| | | medetomidine | | 0.1 | 0.1 | | 0.1 | 0.1 | 0.1 | 0.1 |
| | | thiocyanate copper | 6 | | 0.5 | | 0.5 | 0.5 | 0.5 | 0.5 |
| | | tolylfluanid | | | 0.5 | | 0.5 | 0.5 | 0.5 | 0.5 |
| | | Zineb | 2 | 2 | 0.5 | | 0.5 | 0.5 | 0.5 | 0.5 |
| | | Diuron | | | 0.5 | | 0.5 | 0.5 | 0.5 | 0.5 |
| | plasticizer | paraffin mineral oil | 1 | 1 | 1 | 1 | 1 | 1 | 1 | 1 |
| | | polybutene | 1 | 1 | 1 | 1 | 1 | 1 | 1 | 1 |
| | | chlorinated paraffin | 1 | 1 | 1 | 1 | 1 | 1 | 1 | 1 |
| | | methylphenyl polysiloxane | 1 | 1 | 1 | 1 | 1 | 1 | 1 | 1 |
| | solvent | xylene (containing ethylbenzene) | 1 | 2 | 5.9 | 4 | 6 | 5 | 4 | 4 |
| | | low-boiling point aromatic naphtha | 1 | 1 | | 1 | | 1.5 | | |
| | | white spirits | | | 1 | | | | 1 | 1 |
| | | paraffin based hydrocarbon | | | | | 0.9 | | | |
| | total of liquid a | | 84.5 | 84 | 84.1 | 84 | 84.1 | 83.7 | 84.1 | I 95.1 |
| | curing catalyst | 1-amino-2-ethylhexane | | | 0.3 | | 0.3 | 0.4 | | |
| | | 3- (trimethoxysilyl) propylamine | | | 0.3 | | | | | |
| | | 3-triethoxysilyl-N-(1,3-dimethylbutylidene) propylamine | | | | | 0.3 | | | |
| | | neodecanoic acid | | | 1.0 | | 1 | | | |
| | | di-n-butyltin dilaurate | | | | | | | 1 | 1 |
| | | dibutylbis | | | | | | 1 | | |
| | | diisopropoxybis (ethylacetoacetate) titanium | 1 | 1 | | 1 | | | | |
| | bleeding oil | polyglicoside alkyl modified silicone oil | | 2 | 1 | | | | | |
| | | polyglycerin alkyl modified silicone oil | | 2 | 1 | | | | | |
| | | both terminal polyglycerol modified silicone oil | | 1 | 1 | | | | | |
| liquid b | | polyether modified polysiloxane 1 | 3 | 2 | 1 | 3 | 3 | 3 | 3 | |
| | | polyether modified polysiloxane 2 | 7 | 3 | 1 | 7 | 7 | 7 | 7 | |
| | | polyether modified polysiloxane 3 | 1 | 1 | 1 | 1 | 1 | 1 | 1 | |
| | | both terminal polyether modified polysiloxane | | | 1 | | | | | |
| | | alkyl modified silicone oil | | | 1 | | | | | |
| | | polyoxyethylene (30) lanolin | | | 1 | | | | | |
| | | polyoxyethylene (40) castor oil | | | 1 | | | | | |
| | | modified perfluoropolyether oil | | | 1 | | | | | |
| | solvent | acetyl acetone | 1 | 1 | | 1 | 1 | | | |
| | | dipropylene glycol | | | 1 | | | 1 | | |
| | | n-butanol | | | | | | | 1 | 1 |
| | | xylene (containing ethylbenzene) | 2.5 | 3.0 | 2.3 | 3.0 | 2.3 | 2.9 | 2.9 | 2.9 |
| | total of liquid b | | 15.5 | 16 | 15.9 | 16 | 15.9 | 16.3 | 15.9 | I 4.9 |
| liquid a+ liquid b | | | 100.0 | 100.0 | 100.01 | 100.0 | 100.0 | 100.0 | 100.0 | 100.0 |
| evaluation | adhesiveness test | | A | A | A | A | A | A | A | A |
| | antifouling test | 6 months | AA | AA | AA | AA | AA | AA | AA | AA |
| | | 12 months | AA | AA | AA | AA | AA | AA | AA | AA |
| | | 24 months | AA | AA | AA | AA | AA | AA | AA | AA |
| | | 36 months | AA | AA | AA | AA | AA | AA | AA | AA |

**[Table 16]**

| Table 16 | | | Example | | | | | | | |
|---|---|---|---|---|---|---|---|---|---|---|
| | | | 17 | 18 | 19 | 20 | 21 | 22 | 23 | 24 |
| | copolymerA | A11 | 62 | | | | | | | |
| | | A12 | | 56 | | | | | | |
| | | A13 | | | 62 | | | | | |
| | | A14 | | | | 62 | | | | |
| | | A15 | | | | | 62 | | | |
| | | A16 | | | | | | 62 | 73 | 62 |
| | other resins | gamma-trimethoxy terminal modified polyether | | 1 | | | | | | |
| | | alpha-dimethoxy terminal modified polypropylene olycol 1 | | 1 | | | | | | |
| | | alpha-dimethoxy terminal modified polypropylene glycol with a hioh decree of modification | | 1.1 | | | | | | |
| | | dimethoxy terminal modified branched polypropylene qlvcol | | 1 | | | | | | |
| | anti-tarring agent | polyamide wax | 1 | 1 | 1 | 1 | 1 | 1 | 1 | 1 |
| | | polyethylene oxide | 0.5 | 0.5 | 0.5 | 0.5 | 0.5 | 0.5 | 0.5 | 0.5 |
| | pigment | red iron oxide | 3 | 3 | 3 | 3 | 3 | 3 | 3 | |
| | | titanium oxide | | | | | | | | 3 |
| | | silica | 0.5 | 0.5 | 0.5 | 0.5 | 0.5 | 0.5 | 0.5 | 0.5 |
| | additive | copper pyrithione | 4 | 4 | 4 | 4 | 4 | 4 | 4 | |
| | | zinc pyrithione | 0.5 | 0.5 | 0.5 | 0.5 | 0.5 | 0.5 | 0.5 | 2 |
| | | cuprous oxide | 0.5 | 0.5 | 0.5 | 0.5 | 0.5 | 0.5 | 0.5 | |
| liquid a | | tralopyril | 0.5 | 0.5 | 0.5 | 0.5 | 0.5 | 0.5 | 0.5 | 5 |
| | | DCOIT (30% solution) | 0.5 | 0.5 | 0.5 | 0.5 | 0.5 | 0.5 | 0.5 | 1 |
| | | medetomidine | 0.1 | 0.1 | 0.1 | 0.1 | 0.1 | 0.1 | 0.1 | |
| | | thiocyanate copper | 0.5 | 0.5 | 0.5 | 0.5 | 0.5 | 0.5 | 0.5 | |
| | | tolylfluanid | 0.5 | 0.5 | 0.5 | 0.5 | 0.5 | 0.5 | 0.5 | |
| | | Zineb | 0.5 | 0.5 | 0.5 | 0.5 | 0.5 | 0.5 | 0.5 | |
| | | Diuron | 0.5 | 0.5 | 0.5 | 0.5 | 0.5 | 0.5 | 0.5 | |
| | plasticizer | paraffin mineral oil | 1 | 1 | 1 | 1 | 1 | 1 | 1 | 1 |
| | | polybutene | 1 | 1 | 1 | 1 | 1 | 1 | 1 | 1 |
| | | chlorinated paraffin | 1 | 1 | 1 | 1 | 1 | 1 | 1 | 1 |
| | | methylphenylpolysiloxane | 1 | 1 | 1 | 1 | 1 | 1 | 1 | 1 |
| | solvent | xylene (containing ethylbenzene) | 4 | 5 | 4 | 4 | 4 | 4 | 4 | 4 |
| | | low-boiling point aromatic naphtha | | 1 | 1 | | | 1 | | 1 |
| | | white spirits | | | | 1 | | | | |
| | | naphthene based hydrocarbon | 1 | 0.9 | | | | | 1 | |
| | | paraffin based hydrocarbon | | | | | 1 | | | |
| | total of liquid a | | 84.1 | 84.1 | 84.1 | 84.1 | 84.1 | 84.1 | 95.1 | I 84 |
| | curing catalyst | 1-amino-2-ethylhexane | 0.2 | | | 0.3 | 0.3 | | 0.2 | |
| | | 3- (trimethoxysilyl) propylamine | | | | 0.3 | | | | |
| | | N-2-aminoethyl-3-aminopropyltrimethoxysilane | 0.2 | | | | | | 0.2 | |
| | | N, N, N', N'-tetra methyl-N"-r3-(trimethoxysilyl)propyllquanidine | 0.2 | | | | | | 0.2 | |
| | | 3-triethoxysilyl-N-(1,3-dimethylbutylidene) propylamine | | | | | 0.3 | | | |
| | | neodecanoic acid | 1 | | | 1.0 | 1 | | 1 | |
| | | dibutylbis (2,4-pentanedionato) tin (IV) | | 1 | | | | | | |
| | | diisopropoxybis (ethylacetoacetate) titanium | | | 1 | | | 1 | | 1 |
| liquid b | bleeding oil | polyglicoside alkyl modified silicone oil | | | | | | 1 | | |
| | | polyglycerin alkyl modified silicone oil | | | | | | 1 | | |
| | | both terminal polyglycerol modified silicone oil | | | | | | 1 | | |
| | | polyether modified polysiloxane 1 | 3 | 3 | 3 | 3 | 3 | 1 | | 3 |
| | | polyether modified polysiloxane 2 | 7 | 7 | 7 | 7 | 7 | 1 | | 7 |
| | | polyether modified polysiloxane 3 | 1 | 1 | 1 | 1 | 1 | 1 | | 1 |
| | | both terminal polyether modified polysiloxane | | | | | | 1 | | |
| | | alkyl modified silicone oil | | | | | | 1 | | |
| | | polyoxyethylene (30) lanolin | | | | | | 1 | | |
| | | polyoxyethylene (40) castor oil | | | | | | 1 | | |
| | | modified perfluoropolyether oil | | | | | | 1 | | |
| | solvent | acetyl acetone | 1 | 1 | | 1 | | 1 | | 1 |
| | | dipropylene glycol | | | | | | | 1 | |
| | | diethylene glycol monobutyl ether | | | 1 | | 1 | | | |
| | | xylene (containing ethylbenzene) | 2.3 | 2.9 | 2.9 | 2.3 | 2.3 | 2.9 | 2.3 | 3.0 |
| | totalofliquidb total of liquid b | | 15.9 | 15.9 | 15.9 | 15.9 | 15.9 | 15.9 | 4.9 | 16 |
| liquid a+liquid b | | | 100.0 | 100.0 | 100.0 | 100.0 | 100.01 | 100.0 | 100.0 | 100.0 |
| evaluation | adhesiveness test | | A | A | A | A | A | A | A | A |
| | antifouling test | 6 months | AA | AA | AA | AA | AA | AA | AA | AA |
| | | 12 months | AA | AA | AA | AA | AA | AA | AA | AA |
| | | 24 months | AA | AA | AA | AA | AA | AA | AA | AA |
| | | 36 months | AA | AA | AA | AA | AA | AA | AA | AA |

**[Table 17]**

| Table 17 | | | Example | | | | | | | |
|---|---|---|---|---|---|---|---|---|---|---|
| | | | 25 | 26 | 27 | 28 | 29 | 30 | 31 | 32 |
| | copolymerA | A16 | 62 | 62 | 62 | | | | | |
| | | A17 | | | | 62 | | | | |
| | | A18 | | | | | 62 | | | |
| | | A19 | | | | | | 62 | | |
| | | A20 | | | | | | | 62 | |
| | | A21 | | | | | | | | 62 |
| | anti-tarring agent | polyamide wax | 1 | 1 | 1 | 1 | 1 | 1 | 1 | 1 |
| | | polyethylene oxide | 0.5 | 0.5 | 0.5 | 0.5 | 0.5 | 0.5 | 0.5 | 0.5 |
| | pigment | red iron oxide | 3 | | 1 | 3 | 3 | 3 | 3 | |
| | | titanium oxide | | 3 | | | | | | 3 |
| | | silica | 0.5 | | 0.5 | 0.5 | 0.5 | 0.5 | 0.5 | 0.5 |
| | additive | copper pyrithione | 8 | | 2 | 4 | 4 | 4 | 4 | 4 |
| | | zinc pyrithione | | 2 | | 0.5 | 0.5 | 0.5 | 0.5 | 0.5 |
| | | cuprous oxide | | | 5 | 0.5 | 0.5 | 0.5 | 0.5 | 0.5 |
| | | tralopyril | | | | 0.5 | 0.5 | 0.5 | 0.5 | 0.5 |
| | | DCOIT (30% solution) | | 3 | 3 | 0.5 | 0.5 | 0.5 | 0.5 | 0.5 |
| liquid a | | medetomidine | | | | 0.1 | 0.1 | 0.1 | 0.1 | 0.1 |
| | | thiocyanate copper | | 6 | | 0.5 | 0.5 | 0.5 | 0.5 | 0.5 |
| | | tolylfluanid | | | | 0.5 | 0.5 | 0.5 | 0.5 | 0.5 |
| | | Zineb | | | 2 | 0.5 | 0.5 | 0.5 | 0.5 | 0.5 |
| | | Diuron | | | | 0.5 | 0.5 | 0.5 | 0.5 | 0.5 |
| | plasticizer | paraffin mineral oil | 1 | 1 | 1 | 1 | 1 | 1 | 1 | 1 |
| | | polybutene | 1 | 1 | 1 | 1 | 1 | 1 | 1 | 1 |
| | | chlorinated paraffin | 1 | 1 | 1 | 1 | 1 | 1 | 1 | 1 |
| | | methylphenylpolysiloxane | 1 | 1 | 1 | 1 | 1 | 1 | 1 | 1 |
| | solvent | xylene (containing ethylbenzene) | 4 | 2 | 2 | 4 | 4 | 4 | 4 | 4 |
| | | low-boiling point aromatic naphtha | | | | | | 1 | | |
| | | white spirits | | | | | 1 | | 1 | |
| | | naphthene based hydrocarbon | 1 | 1 | 1 | 1 | | | | 1 |
| | total of liquid a | | 84 | 84.5 | 84 | 84.1 | 84.1 | 84.1 | 84.1 | 84.1 |
| | curing catalyst | 1-amino-2-ethylhexane | 0.2 | 0.2 | 0.2 | 0.2 | 0.3 | | 0.3 | 0.2 |
| | | 3- (trimethoxysilyl) propylamine | | | | | 0.3 | | 0.3 | |
| | | N-2-aminoethyl-3-aminopropyltrimethoxysilane | 0.2 | 0.2 | 0.2 | 0.2 | | | | 0.2 |
| | | N,N,N',N'-tetramethyl-N"-[3-(trimethoxysilyl)propyl]guanidine | 0.2 | 0.2 | 0.2 | 0.2 | | | | 0.2 |
| | | neodecanoic acid | 1 | 1 | 1 | 1 | 1.0 | | 1.0 | 1 |
| | | di-n-butyltin dilaurate | | | | | | 1 | | |
| | bleeding oil | polyglicoside alkyl modified silicone oil | | | 2 | | | | | |
| liquid b | | polyglycerin alkyl modified silicone oil | | | 2 | | | | | |
| | | both terminal polyglycerol modified silicone oil | | | 1 | | | | | |
| | | polyether modified polysiloxane 1 | 3 | 3 | 2 | 3 | 3 | 3 | 3 | 3 |
| | | polyether modified polysiloxane 2 | 7 | 7 | 3 | 7 | 7 | 7 | 7 | 7 |
| | | polyether modified polysiloxane 3 | 1 | 1 | 1 | 1 | 1 | 1 | 1 | 1 |
| | solvent | acetyl acetone | | | | | | | 1 | |
| | | dipropylene glycol | 1 | 1 | 1 | 1 | 1 | | | 1 |
| | | diethylene glycol monobutyl ether | | | | | | 1 | | |
| | | xylene (containing ethylbenzene) | 2.4 | 1.9 | 2.4 | 2.3 | 2.3 | 2.9 | 2.3 | 2.3 |
| | total of liquid b | | 16 | 15.5 | 16 | 15.9 | 15.9 | 15.9 | 15.9 | 15.9 |
| liquid a+liquid b | | | 100.0 | 100.0 | 100.0 | 100.0 | 100.0 | 100.0 | 100.0 | 100.0 |
| evaluation | adhesiveness test | | A | A | A | A | A | A | A | A |
| | antifouling test | 6 months | AA | AA | AA | AA | AA | AA | AA | AA |
| | | 12 months | AA | AA | AA | AA | AA | AA | AA | AA |
| | | 24 months | AA | AA | AA | AA | AA | A | A | B |
| | | 36 months | AA | AA | AA | AA | AA | C | C | C |

**[Table 18]**

| Table 18 | | | Example | | | | | | | |
|---|---|---|---|---|---|---|---|---|---|---|
| | | | 33 | 34 | 35 | 36 | 37 | 38 | 39 | 40 |
| | copolymerA | A22 | 62 | | | | | | | |
| | | A23 | | 62 | | | | | | |
| | | A24 | | | 62 | 73 | 62 | 62 | 62 | 62 |
| | anti-tarring agent | polyamide wax | 1 | 1 | 1 | 1 | 1 | 1 | 1 | 1 |
| | | polyethylene oxide | 0.5 | 0.5 | 0.5 | 0.5 | 0.5 | 0.5 | 0.5 | 0.5 |
| | pigment | red iron oxide | | 3 | 3 | 3 | | 3 | | 1 |
| | | titanium oxide | | | | | 3 | | 3 | |
| | | calcined kaolin | 3 | | | | | | | |
| | | silica | 0.5 | 0.5 | 0.5 | 0.5 | 0.5 | 0.5 | | 0.5 |
| | additive | copper pyrithione | 4 | 4 | 4 | 4 | | 8 | | 2 |
| liquid a | | zinc pyrithione | 0.5 | 0.5 | 0.5 | 0.5 | 2 | | 2 | |
| | | cuprous oxide | 0.5 | 0.5 | 0.5 | 0.5 | | | | 5 |
| | | tralopyril | 0.5 | 0.5 | 0.5 | 0.5 | 5 | | | |
| | | DCOIT (30% solution) | 0.5 | 0.5 | 0.5 | 0.5 | 1 | | 3 | 3 |
| | | medetomidine | 0.1 | 0.1 | 0.1 | 0.1 | | | | |
| | | thiocyanate copper | 0.5 | 0.5 | 0.5 | 0.5 | | | 6 | |
| | | tolylfluanid | 0.5 | 0.5 | 0.5 | 0.5 | | | | |
| | | Zineb | 0.5 | 0.5 | 0.5 | 0.5 | | | | 2 |
| | | Diuron | 0.5 | 0.5 | 0.5 | 0.5 | | | | |
| | plasticizer | paraffin mineral oil | 1 | 1 | 1 | 1 | 1 | 1 | 1 | 1 |
| | | polybutene | 1 | 1 | 1 | 1 | 1 | 1 | 1 | 1 |
| | | chlorinated paraffin | 1 | 1 | 1 | 1 | 1 | 1 | 1 | 1 |
| | | methylphenylpolysiloxane | 1 | 1 | 1 | 1 | 1 | 1 | 1 | 1 |
| | solvent | xylene (containing ethylbenzene) | 4 | 4 | 4 | 4 | 4 | 4 | 2 | 2 |
| | | low-boiling point aromatic naphtha | | 1 | 1 | 1 | 1 | 1 | 1 | 1 |
| | | paraffin based hydrocarbon | 1 | | | | | | | |
| | total of liquid a | | 84.1 | 84.1 | 84.1 | 95.1 | 84 | 84 | 84.5 | 84 |
| | curing catalyst | 1-amino-2-ethylhexane | 0.3 | | | | 0.5 | | | |
| | | 3-triethoxysilyl-N-(1,3-dimethylbutylidene) propylamine | 0.3 | | | | | | | |
| | | neodecanoic acid | 1 | | | | 1.0 | | | |
| | | diisopropoxybis (ethylacetoacetate) titanium | | 1 | 1 | 1 | | 1 | 1 | 1 |
| | bleeding oil | polyglicoside alkyl modified silicone oil | | | 1 | | | | | 2 |
| | | polyglycerin alkyl modified silicone oil | | | 1 | | | | | 2 |
| | | both terminal polyglycerol modified silicone oil | | | 1 | | | | | 1 |
| | | polyether modified polysiloxane 1 | 3 | 3 | 1 | | 3 | 3 | 3 | 2 |
| | | polyether modified polysiloxane 2 | 7 | 7 | 1 | | 7 | 7 | 7 | 3 |
| | | polyether modified polysiloxane 3 | 1 | 1 | 1 | | 1 | 1 | 1 | 1 |
| | | both terminal polyether modified polysiloxane | | | 1 | | | | | |
| liquid b | | alkyl modified silicone oil | | | 1 | | | | | |
| | | polyoxyethylene (30) lanolin | | | 1 | | | | | |
| | | polyoxyethylene (40) castor oil | | | 1 | | | | | |
| | | modified perfluoropolyether oil | | | 1 | | | | | |
| | solvent | acetyl acetone | | 1 | 1 | 1 | 1 | 1 | 1 | 1 |
| | | diethylene glycol monobutyl ether | 1 | | | | | | | |
| | | xylene (containing ethylbenzene) | 2.3 | 2.9 | 2.9 | 2.9 | 2.5 | 3.0 | 2.5 | 3.0 |
| | total of liquid b | | 15.9 | 15.9 | 15.9 | 4.9 | 16 | 16 | 15.5 | 16 |
| liquid a+liquid b | | | 100.0 | 100,0 | 100.0 | 100.0 | 100.0 | 100.0 | 100.0 | 100.0 |
| evaluation | adhesiveness test | | A | A | A | A | A | A | A | A |
| | antifouling test | 6 months | AA | AA | AA | AA | AA | AA | AA | AA |
| | | 12 months | A | 8 | AA | AA | AA | AA | AA | AA |
| | | 24 months | B | c | AA | AA | AA | AA | AA | AA |
| | | 36 months | C | C | AA | AA | AA | AA | AA | AA |

**[Table 19]**

| Table 19 | | | Example | | | | | | | |
|---|---|---|---|---|---|---|---|---|---|---|
| | | | 41 | 42 | 43 | 44 | 45 | 46 | 47 | 48 |
| | copolymerA | A24 | 56 | 40 | | | | | | |
| | | A25 | | 16 | | | | | | |
| | | A26 | | | 56 | | | | | |
| | | A27 | | | | 62 | | | | |
| | | A28 | | | | | 62 | | | |
| | | A29 | | | | | | 62 | | |
| | | A30 | | | | | | | 62 | |
| | | A31 | | | | | | | | 62 |
| | other resins | polyorganosiloxane with silanol aroups at the end | | 2.1 | | | | | | |
| | | gamma-trimethoxy terminal modified polyether | 1 | | | | | | | |
| | | alpha-dimethoxy terminal modified polypropylene alvcol 1 | 1 | | | | | | | |
| liquid a | | alpha-dimethoxy terminal modified polypropylene glycol2 | 1.1 | | | | | | | |
| | | dimethoxy terminal modified modified branched polypropylene glycol | 1 | | | | | | | |
| | | polypropylene glycol | | 2 | | | | | | |
| | | bisphenol A epoxy resin | | | 4.1 | | | | | |
| | anti-tarring agent | polyamide wax | 1 | 1 | 1 | 1 | 1 | 1 | 1 | 1 |
| | | polyethylene oxide | 0.5 | 0.5 | 0.5 | 0.5 | 0.5 | 0.5 | 0.5 | 0.5 |
| | pigment | red iron oxide | 3 | 3 | 3 | 3 | 3 | 3 | 3 | 3 |
| | | silica | 0.5 | 0.5 | 0.5 | 0.5 | 0.5 | 0.5 | 0.5 | 0.5 |
| | additive | copper pyrithione | 4 | 4 | 4 | 4 | 4 | 4 | 4 | 4 |
| | | zinc pyrithione | 0.5 | 0.5 | 0.5 | 0.5 | 0.5 | 0.5 | 0.5 | 0.5 |
| | | cuprous oxide | 0.5 | 0.5 | 0.5 | 0.5 | 0.5 | 0.5 | 0.5 | 0.5 |
| | | tralopyril | 0.5 | 0.5 | 0.5 | 0.5 | 0.5 | 0.5 | 0.5 | 0.5 |
| | | DCOIT (30% solution) | 0.5 | 0.5 | 0.5 | 0.5 | 0.5 | 0.5 | 0.5 | 0.5 |
| | | medetomidine | 0.1 | 0.1 | 0.1 | 0.1 | 0.1 | 0.1 | 0.1 | 0.1 |
| | | thiocyanate copper | 0.5 | 0.5 | 0.5 | 0.5 | 0.5 | 0.5 | 0.5 | 0.5 |
| | | tolylfluanid | 0.5 | 0.5 | 0.5 | 0.5 | 0.5 | 0.5 | 0.5 | 0.5 |
| | | Zineb | 0.5 | 0.5 | 0.5 | 0.5 | 0.5 | 0.5 | 0.5 | 0.5 |
| | | Diuron | 0.5 | 0.5 | 0.5 | 0.5 | 0.5 | 0.5 | 0.5 | 0.5 |
| | plasticizer | paraffin mineral oil | 1 | 1 | 1 | 1 | 1 | 1 | 1 | 1 |
| | | polybutene | 1 | 1 | 1 | 1 | 1 | 1 | 1 | 1 |
| | | chlorinated paraffin | 1 | 1 | 1 | 1 | 1 | 1 | 1 | 1 |
| | | methylphenylpolysiloxane | 1 | 1 | 1 | 1 | 1 | 1 | 1 | 1 |
| | solvent | xylene (containing ethylbenzene) | 5 | 6 | 5 | 4 | 4 | 4 | 4 | 4 |
| | | low-boiling point aromatic naphtha | 1 | | 1.5 | | | 1 | | |
| | | white spirits | | | | | | | 1 | |
| | | naphthene based hydrocarbon | 0.9 | | | 1 | | | | 1 |
| | | paraffin based hydrocarbon | | 0.9 | | | 1 | | | |
| | total of liquid a | | 84.1 | 84.1 | 83.7 | 84.1 | 84.1 | 84.1 | 84.1 | 84.1 |
| | curing catalyst | 1-amino-2-ethylhexane | | 0.3 | 0.4 | 0.2 | 0.3 | | 0.3 | 0.2 |
| | | 3-(trimethoxysilyl) propylamine | | | | | | | 0.3 | |
| | | N-2-aminoethyl-3-aminopropvltrimethoxvsilane | | | | 0.2 | | | | 0.2 |
| | | N,N,N',N'-tetramethyl-N"-[3-(trimethoxysilyl)propyl]guanidine | | | | 0.2 | | | | 0.2 |
| | | 3-triethoxysilyl-N-(1,3-dimethylbutylidene) propylamine | | 0.3 | | | 0.3 | | | |
| | | neodecanoic acid | | 1 | | 1 | 1 | | 1.0 | 1 |
| | | dibutylbis (2,4-pentanedionato) tin (IV) | 1 | | 1 | | | | | |
| | | diisopropoxybis (ethylacetoacetate) titanium | | | | | | 1 | | |
| | bleeding oil | polyglicoside alkyl modified silicone oil | | | 1 | 1 | 1 | 1 | 1 | |
| | | polyglycerin alkyl modified silicone oil | | | 1 | 1 | 1 | 1 | 1 | |
| | | both terminal polyglycerol modified silicone oil | | | 1 | 1 | 1 | 1 | 1 | |
| | | polyether modified polysiloxane 1 | 3 | 3 | 1 | 1 | 1 | 1 | 1 | 3 |
| | | polyether modified polysiloxane 2 | 7 | 7 | 1 | 1 | 1 | 1 | 1 | 7 |
| liquid b | | polyether modified polysiloxane 3 | 1 | 1 | 1 | 1 | 1 | 1 | 1 | 1 |
| | | both terminal polyether modified polysiloxane | | | 1 | 1 | 1 | 1 | 1 | |
| | | alkyl modified silicone oil | | | 1 | 1 | 1 | 1 | 1 | |
| | | polyoxyethylene (30) lanolin | | | 1 | 1 | 1 | 1 | 1 | |
| | | polyoxyethylene (40) castor oil | | | 1 | 1 | 1 | 1 | 1 | |
| | | modified perfluoropolyether oil | | | 1 | 1 | 1 | 1 | 1 | |
| | solvent | acetyl acetone | 1 | 1 | | 1 | | | 1 | |
| | | dipropylene glycol | | | 1 | | 1 | | | 1 |
| | | diethylene glycol monobutyl ether | | | | | | 1 | | |
| | | xylene (containina ethylbenzene) | 2.9 | 2.3 | 2.9 | 2.3 | 2.3 | 2.9 | 2.3 | 2.3 |
| | total of liquid b | | 15.9 | 15.9 | 16.3 | 15.9 | 15.9 | 15.9 | 15.9 | 15.9 |
| liquid a+liquid b | | | 100.0 | 100.0 | 100.0 | 100.0 | 100.0 | 100.0 | 100.0 | 100.0 |
| evaluation | adhesiveness test | | A | A | A | A | A | A | A | A |
| | antifouling test | 6 months | AA | AA | AA | AA | AA | AA | AA | AA |
| | | 12 months | AA | AA | AA | AA | AA | AA | AA | AA |
| | | 24 months | AA | AA | AA | AA | AA | AA | AA | AA |
| | | 36 months | AA | AA | AA | AA | AA | AA | AA | AA |

**[Table 20]**

| Table 20 | | | Example | | | | | | | |
|---|---|---|---|---|---|---|---|---|---|---|
| | | | 49 | 50 | 51 | 52 | 53 | 54 | 55 | 56 |
| | copolymerA | A32 | 62 | | | | | | | |
| | | A33 | | 62 | | | | | | |
| | | A34 | | | 62 | | | | | |
| | | A35 | | | | 62 | | | | |
| | | A36 | | | | | 62 | | | |
| | | A37 | | | | | | 62 | | |
| | | A38 | | | | | | | 62 | |
| | | A39 | | | | | | | | 62 |
| | anti-tarring agent | polyamide wax | 1 | 1 | 1 | 1 | 1 | 1 | 1 | 1 |
| | | polyethylene oxide | 0.5 | 0.5 | 0.5 | 0.5 | 0.5 | 0.5 | 0.5 | 0.5 |
| | pigment | red iron oxide | 3 | 3 | 3 | 3 | 3 | | | 3 |
| | | titanium oxide | | | | | | 3 | | |
| | | calcined kaolin | | | | | | | 3 | |
| | | silica | 0.5 | 0.5 | 0.5 | 0.5 | 0.5 | 0.5 | 0.5 | 0.5 |
| | additive | copper pyrithione | 4 | 4 | 4 | 4 | 4 | 4 | 4 | 4 |
| | | zinc pyrithione | 0.5 | 0.5 | 0.5 | 0.5 | 0.5 | 0.5 | 0.5 | 0.5 |
| liquid a | | cuprous oxide | 0.5 | 0.5 | 0.5 | 0.5 | 0.5 | 0.5 | 0.5 | 0.5 |
| | | tralopyril | 0.5 | 0.5 | 0.5 | 0.5 | 0.5 | 0.5 | 0.5 | 0.5 |
| | | DCOIT (30% solution) | 0.5 | 0.5 | 0.5 | 0.5 | 0.5 | 0.5 | 0.5 | 0.5 |
| | | medetomidine | 0.1 | 0.1 | 0.1 | 0.1 | 0.1 | 0.1 | 0.1 | 0.1 |
| | | thiocyanate copper | 0.5 | 0.5 | 0.5 | 0.5 | 0.5 | 0.5 | 0.5 | 0.5 |
| | | tolylfluanid | 0.5 | 0.5 | 0.5 | 0.5 | 0.5 | 0.5 | 0.5 | 0.5 |
| | | Zineb | 0.5 | 0.5 | 0.5 | 0.5 | 0.5 | 0.5 | 0.5 | 0.5 |
| | | Diuron | 0.5 | 0.5 | 0.5 | 0.5 | 0.5 | 0.5 | 0.5 | 0.5 |
| | plasticizer | paraffin mineral oil | 1 | 1 | 1 | 1 | 1 | 1 | 1 | 1 |
| | | polybutene | 1 | 1 | 1 | 1 | 1 | 1 | 1 | 1 |
| | | chlorinated paraffin | 1 | 1 | 1 | 1 | 1 | 1 | 1 | 1 |
| | | methylphenylpolysiloxane | 1 | 1 | 1 | 1 | 1 | 1 | 1 | 1 |
| | solvent | xylene (containing ethylbenzene) | 4 | 4 | 4 | 4 | 4 | 4 | 4 | 4 |
| | | low-boiling point aromatic naphtha | | 1 | | 1 | | | | 1 |
| | | white spirits | | | 1 | | 1 | | | |
| | | naphthene based hydrocarbon | | | | | | 1 | | |
| | | paraffin based hydrocarbon | 1 | | | | | | 1 | |
| | total of liquid a | | 84.1 | 84.1 | 84.1 | 84.1 | 84.1 | 84.1 | 84.1 | 84.1 |
| | curing catalyst | 1-amino-2-ethylhexane | 0.3 | | 0.3 | | 0.3 | 0.2 | 0.3 | |
| | | 3- (trimethoxysilyl) propylamine | | | 0.3 | | 0.3 | | | |
| | | N-2-aminoethyl-3-aminopropyltrimethoxysilane | | | | | | 0.2 | | |
| | | N,N,N',N'-tetramethyl-N"-[3-(trimethoxysilyl)propyl]guanidine | | | | | | 0.2 | | |
| | | 3-triethoxysilyl-N-(1,3-dimethylbutylidene) propylamine | 0.3 | | | | | | 0.3 | |
| | | neodecanoic acid | 1 | | 1.0 | | 1.0 | 1 | 1 | |
| | | diisopropoxybis (ethylacetoacetate) titanium | | 1 | | 1 | | | | 1 |
| | bleeding oil | polyether modified polysiloxane 1 | 3 | 3 | 3 | 3 | 3 | 3 | 3 | 3 |
| liquid b | | polyether modified polysiloxane 2 | 7 | 7 | 7 | 7 | 7 | 7 | 7 | 7 |
| | | polyether modified polysiloxane 3 | 1 | 1 | 1 | 1 | 1 | 1 | 1 | 1 |
| | solvent | acetyl acetone | | 1 | | | 1 | | | 1 |
| | | dipropylene glycol | | | 1 | | | 1 | | |
| | | diethylene glycol monobutyl ether | 1 | | | 1 | | | 1 | |
| | | xylene (containing ethylbenzene) | 2.3 | 2.9 | 2.3 | 2.9 | 2.3 | 2.3 | 2.3 | 2.9 |
| | total of liquid b | | 15.9 | 15.9 | 15.9 | 15.9 | 15.9 | 15.9 | 15.9 | 15.9 |
| liquid a+liquid b | | | 100.0 | 100.0 | 100.0 | 100.0 | 100.0 | 100.0 | 100.0 | 100.0 |
| evaluation | adhesiveness test | | A | A | A | A | A | A | A | A |
| | antifouling test | 6 months | AA | AA | AA | AA | AA | AA | AA | AA |
| | | 12 months | AA | AA | AA | AA | AA | AA | AA | AA |
| | | 24 months | AA | AA | AA | AA | A | AA | AA | AA |
| | | 36 months | AA | AA | AA | AA | C | AA | AA | AA |

**[Table 21]**

| Table 21 | | | Example | | | | | | | |
|---|---|---|---|---|---|---|---|---|---|---|
| | | | 57 | 58 | 59 | 60 | 61 | 62 | 63 | 64 |
| | copolymerA | A40 | 56 | | | | | | | |
| | | A41 | | 56 | | | | | | |
| | | A42 | | | 56 | | | | | |
| | | A43 | | | | 62 | | | | |
| | | A44 | | | | | 62 | | | |
| | | A45 | | | | | | 62 | | |
| | | A46 | | | | | | | 62 | |
| | | A47 | | | | | | | | 62 |
| | other resins | polyorganosiloxane with silanol group at the end | | 2.1 | | | | | | |
| | | gamma-trimethoxy terminal modified polyether | 1 | | | | | | | |
| | | alpha-dimethoxy terminal modified polypropylene glycol 1 | 1 | | | | | | | |
| | | alpha-dimethoxy terminal modified polypropylene glycol with a high decree of modification | 1.1 | | | | | | | |
| | | dimethoxy terminal modified branched polypropylene glycol | 1 | | | | | | | |
| | | polypropylene glycol | | 2 | | | | | | |
| | | bisphenol A epoxy resin | | | 4.1 | | | | | |
| | anti-tarring agent | polyamide wax | 1 | 1 | 1 | 1 | 1 | 1 | 1 | 1 |
| | | polyethylene oxide | 0.5 | 0.5 | 0.5 | 0.5 | 0.5 | 0.5 | 0.5 | 0.5 |
| liquid a | pigment | red iron oxide | 3 | 3 | 3 | 3 | 3 | 3 | 3 | 3 |
| | | silica | 0.5 | 0.5 | 0.5 | 0.5 | 0.5 | 0.5 | 0.5 | 0.5 |
| | additive | copper pyrithione | 4 | 4 | 4 | 4 | 4 | 4 | 4 | 4 |
| | | zinc pyrithione | 0.5 | 0.5 | 0.5 | 0.5 | 0.5 | 0.5 | 0.5 | 0.5 |
| | | cuprous oxide | 0.5 | 0.5 | 0.5 | 0.5 | 0.5 | 0.5 | 0.5 | 0.5 |
| | | tralopyril | 0.5 | 0.5 | 0.5 | 0.5 | 0.5 | 0.5 | 0.5 | 0.5 |
| | | DCOIT (30% solution) | 0.5 | 0.5 | 0.5 | 0.5 | 0.5 | 0.5 | 0.5 | 0.5 |
| | | medetomidine | 0.1 | 0.1 | 0.1 | 0.1 | 0.1 | 0.1 | 0.1 | 0.1 |
| | | thiocyanate copper | 0.5 | 0.5 | 0.5 | 0.5 | 0.5 | 0.5 | 0.5 | 0.5 |
| | | tolylfluanid | 0.5 | 0.5 | 0.5 | 0.5 | 0.5 | 0.5 | 0.5 | 0.5 |
| | | Zineb | 0.5 | 0.5 | 0.5 | 0.5 | 0.5 | 0.5 | 0.5 | 0.5 |
| | | Diuron | 0.5 | 0.5 | 0.5 | 0.5 | 0.5 | 0.5 | 0.5 | 0.5 |
| | plasticizer | paraffin mineral oil | 1 | 1 | 1 | 1 | 1 | 1 | 1 | 1 |
| | | polybutene | 1 | 1 | 1 | 1 | 1 | 1 | 1 | 1 |
| | | chlorinated paraffin | 1 | 1 | 1 | 1 | 1 | 1 | 1 | 1 |
| | | methylphenylpolysiloxane | 1 | 1 | 1 | 1 | 1 | 1 | 1 | 1 |
| | solvent | xylene (containing ethylbenzene) | 5 | 6 | 5 | 4 | 4 | 4 | 4 | 4 |
| | | low-boiling point aromatic naphtha | 1 | | 1.5 | | | 1 | | |
| | | white spirits | | | | | | | 1 | |
| | | naphthene based hydrocarbon | 0.9 | | | 1 | | | | 1 |
| | | paraffin based hydrocarbon | | 0.9 | | | 1 | | | |
| | total of liquid a | | 84.1 | 84.1 | 83.7 | 84.1 | 84.1 | 84.1 | 84.1 | 84.1 |
| | curing catalyst | 1-amino-2-ethylhexane | | 0.3 | 0.4 | 0.2 | 0.3 | | 0.3 | 0.2 |
| | | 3- (trimethoxysilyl) propylamine | | | | | | | 0.3 | |
| | | N-2-aminoethyl-3-aminopropyltrimethoxysilane | | | | 0.2 | | | | 0.2 |
| | | N,N,N',N'-tetramethyl-N"-[3-(trimethoxysilyl)propyl]guanidine | | | | 0.2 | | | | 0.2 |
| | | 3-triethoxysilyl-N-(1,3-dimethylbutylidene) propylamine | | 0.3 | | | 0.3 | | | |
| | | neodecanoic acid | | 1 | | 1 | 1 | | 1.0 | 1 |
| | | dibutylbis (2,4-pentanedionato) tin (IV) | 1 | | 1 | | | | | |
| | | diisopropoxybis (ethylacetoacetate) titanium | | | | | | 1 | | |
| liquid b | bleeding oil | polyether modified polysiloxane 1 | 3 | 3 | 3 | 3 | 3 | 3 | 3 | 3 |
| | | polyether modified polysiloxane 2 | 7 | 7 | 7 | 7 | 7 | 7 | 7 | 7 |
| | | polyether modified polysiloxane 3 | 1 | 1 | 1 | 1 | 1 | 1 | 1 | 1 |
| | solvent | acetyl acetone | 1 | 1 | | 1 | | | 1 | |
| | | dipropylene glycol | | | 1 | | 1 | | | 1 |
| | | diethylene glycol monobutyl ether | | | | | | 1 | | |
| | | xylene (containing ethylbenzene) | 2.9 | 2.3 | 2.9 | 2.3 | 2.3 | 2.9 | 2.3 | 2.3 |
| | total of liquid b | | 15.9 | 15.9 | 16.3 | 15.9 | 15.9 | 15.9 | 15.9 | 15.9 |
| liquid a+liquid b | | | 100.0 | 100.0 | 100.0 | 100.0 | 100.0 | 100.0 | 100.0 | 100.0 |
| evaluation | adhesiveness test | | A | A | A | A | A | A | A | A |
| | antifouling test | 6 months | AA | AA | AA | AA | AA | AA | AA | AA |
| | | 12 months | AA | AA | AA | AA | AA | AA | AA | AA |
| | | 24 months | AA | AA | AA | AA | AA | AA | AA | AA |
| | | 36 months | AA | AA | AA | AA | AA | AA | AA | AA |

**[Table 22]**

| Table 22 | | | Example | | | | | | | |
|---|---|---|---|---|---|---|---|---|---|---|
| | | | 65 | 66 | 67 | 68 | 69 | 70 | 71 | 72 |
| liquid a | copolymerA | A48 | 62 | | | | | | | |
| | | A49 | | 62 | | | | | | |
| | | A50 | | | 62 | | | | | |
| | | A51 | | | | 62 | | | | |
| | | A52 | | | | | 62 | | | |
| | | A53 | | | | | | 62 | | |
| | | A54 | | | | | | | 62 | |
| | | A55 | | | | | | | | 62 |
| | anti-tarring agent | polyamide wax | 1 | 1 | 1 | 1 | 1 | 1 | 1 | 1 |
| | | polyethylene oxide | 0.5 | 0.5 | 0.5 | 0.5 | 0.5 | 0.5 | | 0.5 |
| | pigment | red iron oxide | 3 | 3 | 3 | 3 | 3 | 3 | 6 | 3 |
| | | silica | 0.5 | 0.5 | 0.5 | 0.5 | 0.5 | 0.5 | 1 | 0.5 |
| | additive | copper pyrithione | 4 | 4 | 4 | 4 | 4 | 4 | 8 | 4 |
| | | zinc pyrithione | 0.5 | 0.5 | 0.5 | 0.5 | 0.5 | 0.5 | | 0.5 |
| | | cuprous oxide | 0.5 | 0.5 | 0.5 | 0.5 | 0.5 | 0.5 | | 0.5 |
| | | tralopyril | 0.5 | 0.5 | 0.5 | 0.5 | 0.5 | 0.5 | | 0.5 |
| | | DCOIT (30% solution) | 0.5 | 0.5 | 0.5 | 0.5 | 0.5 | 0.5 | | 0.5 |
| | | medetomidine | 0.1 | 0.1 | 0.1 | 0.1 | 0.1 | 0.1 | 0.1 | 0.1 |
| | | thiocyanate copper | 0.5 | 0.5 | 0.5 | 0.5 | 0.5 | 0.5 | | 0.5 |
| | | tolylfluanid | 0.5 | 0.5 | 0.5 | 0.5 | 0.5 | 0.5 | | 0.5 |
| | | Zineb | 0.5 | 0.5 | 0.5 | 0.5 | 0.5 | 0.5 | | 0.5 |
| | | Diuron | 0.5 | 0.5 | 0.5 | 0.5 | 0.5 | 0.5 | | 0.5 |
| | plasticizer | paraffin mineral oil | 1 | 1 | 1 | 1 | 1 | 1 | 1 | 1 |
| | | polybutene | 1 | 1 | 1 | 1 | 1 | 1 | 1 | 1 |
| | | chlorinated paraffin | 1 | 1 | 1 | 1 | 1 | 1 | 1 | 1 |
| | | methylphenylpolysiloxane | 1 | 1 | 1 | 1 | 1 | 1 | 1 | 1 |
| | solvent | xylene (containing ethylbenzene) | 4 | 4 | 4 | 4 | 4 | 4 | 4 | 4 |
| | | low-boiling point aromatic naphtha | 1 | | 1 | | 1 | | 1 | |
| | | paraffin based hydrocarbon | | 1 | | 1 | | 1 | | 1 |
| | total of liquid a | | 84.1 | 84.1 | 84.1 | 84.1 | 84.1 | 84.1 | 87.1 | 84.1 |
| liquid b | curing catalyst | 1-amino-2-ethylhexane | | 0.3 | | 0.3 | | 0.3 | | 0.3 |
| | | 3-triethoxysilyl-N-(1,3-dimethylbutylidene) propylamine | | 0.3 | | 0.3 | | 0.3 | | 0.3 |
| | | neodecanoic acid | | 1 | | 1 | | 1 | | 1 |
| | | diisopropoxybis | 1 | | 1 | | 1 | | 1 | |
| | | (ethylacetoacetate) titanium | | | | | | | | |
| | bleeding oil | polyether modified polysiloxane 1 | 3 | 3 | 3 | 3 | 3 | 3 | | 3 |
| | | polyether modified polysiloxane 2 | 7 | 7 | 7 | 7 | 7 | 7 | 8 | 7 |
| | | polyether modified polysiloxane 3 | 1 | 1 | 1 | 1 | 1 | 1 | | 1 |
| | solvent | acetyl acetone | | 1 | | 1 | | 1 | 1 | 1 |
| | | diethylene glycol monobutyl ether | 1 | | 1 | | 1 | | | |
| | | xylene (containing ethylbenzene) | 2.9 | 2.3 | 2.9 | 2.3 | 2.9 | 2.3 | 2.9 | 2.3 |
| | total of liquid b | | 15.9 | 15.9 | 15.9 | 15.9 | 15.9 | 15.9 | 12.9 | 15.9 |
| liquid a+liquid b | | | 100.0 | 100.0 | 100.0 | 100.0 | 100.0 | 100.0 | 100.0 | 100.0 |
| evaluation | adhesiveness test | | A | A | A | A | A | A | A | A |
| | antifouling test | 6 months | AA | AA | AA | AA | AA | AA | AA | AA |
| | | 12 months | AA | AA | AA | AA | AA | AA | AA | AA |
| | | 24 months | AA | AA | AA | AA | AA | AA | AA | AA |
| | | 36 months | AA | AA | AA | AA | AA | AA | AA | AA |

**[Table 23]**

| Table 23 | | Example | | | | | |
|---|---|---|---|---|---|---|---|
| | | 73 | 74 | 75 | 76 | 77 | 78 |
| copolymerA | A5 | 56 | | | | | |
| | A8 | | 56 | | | | |
| | A9 | | | 56 | | | |
| | A11 | | | | 62 | | |
| | A15 | | | | | 62 | |
| | A17 | | | | | | 56 |
| other resins | gamma-trimethoxy terminal modified polyether | 1 | | | | | 1 |
| | alpha-dimethoxy terminal modified polypropylene glycol1 | 1 | | | | | 1 |
| | alpha-dimethoxy terminal modified polypropylene glycol2 | 1.1 | | | | | |
| | alpha-dimethoxy terminal modified polypropylene glycol with a high degree of modification | | | | | | 1.1 |
| | dimethoxy terminal modified branched polypropylene glycol | 1 | | | | | 1 |
| | polypropylene glycol | | | 4.1 | | | |
| | bisphenol A epoxy resin | | 4.1 | | | | |
| anti-tarring agent | polyamide wax | 1 | 1 | 1 | 1 | 1 | 1 |
| | polyethylene oxide | 0.5 | 0.5 | 0.5 | 0.5 | 0.5 | 0.5 |
| pigment | red iron oxide | 3 | 3 | 3 | 3 | 3 | 3 |
| | silica | 0.5 | 0.5 | 0.5 | 0.5 | 0.5 | 0.5 |
| antifouling agent | copper pyrithione | 4 | 4 | 4 | 4 | 4 | 4 |
| | zinc pyrithione | 0.5 | 0.5 | 0.5 | 0.5 | 0.5 | 0.5 |
| | cuprous oxide | 0.5 | 0.5 | 0.5 | 0.5 | 0.5 | 0.5 |
| | tralopyril | 0.5 | 0.5 | 0.5 | 0.5 | 0.5 | 0.5 |
| | DCOIT (30% solution) | 0.5 | 0.5 | 0.5 | 0.5 | 0.5 | 0.5 |
| | medetomidine | 0.1 | 0.1 | 0.1 | 0.1 | 0.1 | 0.1 |
| | thiocyanate copper | 0.5 | 0.5 | 0.5 | 0.5 | 0.5 | 0.5 |
| | tolylfluanid | 0.5 | 0.5 | 0.5 | 0.5 | 0.5 | 0.5 |
| | Zineb | 0.5 | 0.5 | 0.5 | 0.5 | 0.5 | 0.5 |
| | Diuron | 0.5 | 0.5 | 0.5 | 0.5 | 0.5 | 0.5 |
| bleeding oil | polyether modified polysiloxane 1 | 3 | 3 | 3 | 3 | 3 | 3 |
| | polyether modified polysiloxane 2 | 7 | 7 | 7 | 7 | 7 | 7 |
| | polyether modified polysiloxane 3 | 1 | 1 | 1 | 1 | 1 | 1 |
| curing catalyst | 1-amino-2-ethylhexane | 0.3 | 0.4 | | 0.2 | | |
| | 3- (trimethoxysilyl) propylamine | 0.3 | | | | | |
| | N-2-aminoethyl-3-aminopropyltrimethoxysilane | | | | 0.2 | | |
| | N,N,N',N'-tetramethyl-N"-[3-(trimethoxysilyl)propyl]guanidine | | | | 0.2 | | |
| | neodecanoic acid | 1.0 | | | 1 | | |
| | di-n-butyltin dilaurate | | | 1 | | | |
| | dibutylbis (2,4-pentanedionato) tin (IV) | | 1 | | | | 1 |
| | diisopropoxybis (ethylacetoacetate) titanium | | | | | 1 | |
| plasticizer | paraffin mineral oil | 1 | 1 | 1 | 1 | 1 | 1 |
| | polybutene | 1 | 1 | 1 | 1 | 1 | 1 |
| | chlorinated paraffin | 1 | 1 | 1 | 1 | 1 | 1 |
| | methylphenylpolysiloxane | 1 | 1 | 1 | 1 | 1 | 1 |
| dehydration agent | vinyltrimethoxysilane | 0.5 | 0.5 | 0.5 | 0.5 | 0.5 | 0.5 |
| | tris (isopropenyloxy) vinylsilane | 0.5 | 0.5 | 0.5 | 0.5 | 0.5 | 0.5 |
| | zeolite | | 0.5 | | 0.5 | | 0.5 |
| | gypsum anhydride | 0.5 | | 0.5 | | 0.5 | |
| solvent | acetyl acetone | | 1 | | | 1 | |
| | dipropylene glycol | 1 | | | 1 | | |
| | n-butanol | | | 1 | | | |
| | xylene (containing ethylbenzene) | 6.7 | 6.4 | 6.4 | 4.8 | 5.4 | 7.4 |
| | low-boiling point aromatic naphtha | | 1.5 | | | 1 | 1 |
| | white spirits | 1 | | 1.9 | | | |
| | naphthene based hydrocarbon | | | | 1 | | 0.9 |
| total | | 100.0 | 100.0 | 100.0 | 100.0 | 100.0 | 100.0 |
| adhesiveness test | | A | A | A | A | A | A |
| antifouling test | 6 months | AA | AA | AA | AA | AA | AA |
| | 12 months | AA | AA | AA | AA | AA | AA |
| | 24 months | AA | AA | AA | AA | AA | AA |
| | 36 months | AA | AA | AA | AA | AA | AA |

**[Table 24]**

| Table 24 | | Example | | | | | |
|---|---|---|---|---|---|---|---|
| | | 79 | 80 | 81 | 82 | 83 | 84 |
| copolymerA | A24 | 56 | | | | | |
| | A27 | | 56 | | | | |
| | A28 | | | 62 | | | |
| | A30 | | | | 62 | | |
| | A31 | | | | | 62 | |
| | A32 | | | | | | 56 |
| other resins | polyorganosiloxane with silanol group at the end | 2.1 | | | | | 2.1 |
| | polypropylene glycol | 2 | | | | | 2 |
| | bisphenol A epoxy resin | | 4.1 | | | | |
| anti-tarring agent | polyamide wax | 1 | 1 | 1 | 1 | 1 | 1 |
| | polyethylene oxide | 0.5 | 0.5 | 0.5 | 0.5 | 0.5 | 0.5 |
| pigment | red iron oxide | 3 | 3 | 3 | 3 | 3 | 3 |
| | silica | 0.5 | 0.5 | 0.5 | 0.5 | 0.5 | 0.5 |
| antifouling agent bleeding oil | copper pyrithione | 4 | 4 | 4 | 4 | 4 | 4 |
| | zinc pyrithione | 0.5 | 0.5 | 0.5 | 0.5 | 0.5 | 0.5 |
| | cuprous oxide | 0.5 | 0.5 | 0.5 | 0.5 | 0.5 | 0.5 |
| | tralopyril | 0.5 | 0.5 | 0.5 | 0.5 | 0.5 | 0.5 |
| | DCOIT (30% solution) | 0.5 | 0.5 | 0.5 | 0.5 | 0.5 | 0.5 |
| | medetomidine | 0.1 | 0.1 | 0.1 | 0.1 | 0.1 | 0.1 |
| | thiocyanate copper | 0.5 | 0.5 | 0.5 | 0.5 | 0.5 | 0.5 |
| | tolylfluanid | 0.5 | 0.5 | 0.5 | 0.5 | 0.5 | 0.5 |
| | Zineb | 0.5 | 0.5 | 0.5 | 0.5 | 0.5 | 0.5 |
| | Diuron | 0.5 | 0.5 | 0.5 | 0.5 | 0.5 | 0.5 |
| | polyether modified polysiloxane 1 | 3 | 3 | 3 | 3 | 3 | 3 |
| | polyether modified polysiloxane 2 | 7 | 7 | 7 | 7 | 7 | 7 |
| | polyether modified polysiloxane 3 | 1 | 1 | 1 | 1 | 1 | 1 |
| curing catalyst | 1-amino-2-ethylhexane | 0.3 | 0.4 | 0.3 | 0.2 | 0.3 | 0.3 |
| | N-2-aminoethyl-3-aminopropyltrimethoxysilane | | | | 0.2 | | |
| | N,N,N',N'-tetramethyl-N"-[3-(trimethoxysilyl)propyl]guanidine | | | | 0.2 | | |
| | 3-triethoxysilyl-N-(1,3-dimethylbutylidene) propylamine | 0.3 | | 0.3 | | 0.3 | 0.3 |
| | neodecanoic acid | 1 | | 1 | 1 | 1 | 1 |
| | dibutylbis (2,4-pentanedionato) tin (IV) | | 1 | | | | |
| plasticizer | paraffin mineral oil | 1 | 1 | 1 | 1 | 1 | 1 |
| | polybutene | 1 | 1 | 1 | 1 | 1 | 1 |
| | chlorinated paraffin | 1 | 1 | 1 | 1 | 1 | 1 |
| | methylphenylpolysiloxane | 1 | 1 | 1 | 1 | 1 | 1 |
| 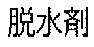 | vinyltrimethoxysilane | 0.5 | 0.5 | 0.5 | 0.5 | 0.5 | 0.5 |
| | tris (isopropenyloxy) vinylsilane | 0.5 | 0.5 | 0.5 | 0.5 | 0.5 | 0.5 |
| | zeolite | 0.5 | 0.5 | | | 0.5 | 0.5 |
| | gypsum anhydride | | | 0.5 | 0.5 | | |
| solvent | acetyl acetone | 1 | | | | | 1 |
| | dipropylene glycol | | 1 | 1 | 1 | | |
| | diethylene glycol monobutyl ether | | | | | 1 | |
| | xylene (containing ethylbenzene) | 6.8 | 6.4 | 4.8 | 4.8 | 4.8 | 6.8 |
| | low-boiling point aromatic naphtha | | 1.5 | | | | |
| | naphthene based hydrocarbon | | | | 1 | | |
| | paraffin based hydrocarbon | 0.9 | | 1 | | 1 | 0.9 |
| total | | 100.0 | 100.0 | 100.0 | 100.0 | 100.0 | 100.0 |
| adhesiveness test | | A | A | A | A | A | A |
| antifouling test | 6 months | AA | AA | AA | AA | AA | AA |
| | 12 months | AA | AA | AA | AA | AA | AA |
| | 24 months | AA | AA | AA | AA | AA | AA |
| | 36 months | AA | AA | AA | AA | AA | AA |

**[Table 25]**

| Table 25 | | Example | | | | |
|---|---|---|---|---|---|---|
| | | 85 | 86 | 87 | 88 | 89 |
| copolymerA | A37 | 56 | | | | |
| | A48 | | 62 | | | |
| | A50 | | | 62 | | |
| | A52 | | | | 62 | |
| | A54 | | | | | 62 |
| other resins | bisphenol A epoxy resin | 4.1 | | | | |
| anti-tarring agent | polyamide wax | 1 | 1 | 1 | 1 | 1 |
| | polyethylene oxide | 0.5 | 0.5 | 0.5 | 0.5 | 0.5 |
| pigment | red iron oxide | 3 | 3 | 3 | 3 | 3 |
| | silica | 0.5 | 0.5 | 0.5 | 0.5 | 0.5 |
| ntifouling age | copper pyrithione | 4 | 4 | 4 | 4 | 4 |
| | zinc pyrithione | 0.5 | 0.5 | 0.5 | 0.5 | 0.5 |
| | cuprous oxide | 0.5 | 0.5 | 0.5 | 0.5 | 0.5 |
| | tralopyril | 0.5 | 0.5 | 0.5 | 0.5 | 0.5 |
| | DCOIT (30% solution) | 0.5 | 0.5 | 0.5 | 0.5 | 0.5 |
| | medetomidine | 0.1 | 0.1 | 0.1 | 0.1 | 0.1 |
| | thiocyanate copper | 0.5 | 0.5 | 0.5 | 0.5 | 0.5 |
| | tolylfluanid | 0.5 | 0.5 | 0.5 | 0.5 | 0.5 |
| | Zineb | 0.5 | 0.5 | 0.5 | 0.5 | 0.5 |
| | Diuron | 0.5 | 0.5 | 0.5 | 0.5 | 0.5 |
| bleeding oil | polyether modified polysiloxane 1 | 3 | 3 | 3 | 3 | 3 |
| | polyether modified polysiloxane 2 | 7 | 7 | 7 | 7 | 7 |
| | polyether modified polysiloxane 3 | 1 | 1 | 1 | 1 | 1 |
| curing catalyst | 1-amino-2-ethylhexane | 0.4 | 0.2 | | 0.3 | 0.3 |
| | N-2-aminoethyl-3-aminopropyltrimethoxysilane | | 0.2 | | | |
| | N,N,N',N'-tetramethyl-N"-[3-(trimethoxysilyl)propyl]guanidine | | 0.2 | | | |
| | 3-triethoxysilyl-N-(1,3-dimethylbutylidene) propylamine | | | | 0.3 | 0.3 |
| | neodecanoic acid | | 1 | | 1 | 1 |
| | dibutylbis (2,4-pentanedionato) tin (IV) | 1 | | | | |
| | diisopropoxybis (ethylacetoacetate) titanium | | | 1 | | |
| plasticizer | paraffin mineral oil | 1 | 1 | 1 | 1 | 1 |
| | polybutene | 1 | 1 | 1 | 1 | 1 |
| | chlorinated paraffin | 1 | 1 | 1 | 1 | 1 |
| | methylphenylpolysiloxane | 1 | 1 | 1 | 1 | 1 |
| dehydration agent | vinyltrimethoxysilane | 0.5 | 0.5 | 0.5 | 0.5 | 0.5 |
| | tris (isopropenyloxy) vinylsilane | 0.5 | 0.5 | 0.5 | 0.5 | 0.5 |
| | zeolite | | 0.5 | 0.5 | | 0.5 |
| | gypsum anhydride | 0.5 | | | 0.5 | |
| solvent | acetyl acetone | | | | 1 | 1 |
| | dipropylene glycol | 1 | 1 | 1 | | |
| | xylene (containing ethylbenzene) | 6.4 | 4.8 | 4.4 | 4.8 | 4.8 |
| | low-boiling point aromatic naphtha | 1.5 | | 1 | | |
| | naphthene based hydrocarbon | | 1 | 1 | | |
| | paraffin based hydrocarbon | | | | 1 | 1 |
| total | | 100.0 | 100.0 | 100.0 | 100.0 | 100.0 |
| adhesiveness test | | A | A | A | A | A |
| antifouling test | 6 months | AA | AA | AA | AA | AA |
| | 12 months | AA | AA | AA | AA | AA |
| | 24 months | AA | AA | AA | AA | AA |
| | 36 months | AA | AA | AA | AA | AA |

**[Table 26]**

| Table 26 | | | Example | | | | | | | |
|---|---|---|---|---|---|---|---|---|---|---|
| | | | 90 | 91 | 92 | 93 | 94 | 95 | 96 | 97 |
| liquid a | copolymerA | A56 | 70 | | | | | | | |
| | | A57 | | 62 | | | | | | |
| | | A58 | | | 67 | | | | | |
| | | A59 | | | | 65 | | | | |
| | | A60 | | | | | 62 | | | |
| | | A61 | | | | | | 64 | | |
| | | A62 | | | | | | | 60 | |
| | | A63 | | | | | | | | 68 |
| | anti-tarring agent | polyamide wax | | | | | 1 | | | |
| | pigment | red iron oxide | 2 | 1 | 2 | 2 | 3 | 3 | 3 | 3 |
| | | titanium oxide | | 1 | | | | | | |
| | | hydrophilic silica1 | 1 | | 1 | | 1 | 1 | 1 | 1 |
| | | hydrophilic silica2 | | 6 | | 4 | | | | |
| | additive | copper pyrithione | 9 | 3 | 7 | 7 | 7 | 8 | 8 | 8 |
| | | cuprous oxide | | 6 | | 4 | | | | |
| | | tralopyril | | | | 1 | | | | |
| | | DCOIT (30% solution) | | | 3 | | 3 | 3 | 4 | |
| | | medetomidine | | | | | | | 1 | |
| | | Zineb | | | 5 | | 4 | | | |
| | plasticizer | paraffin mineral oil | | | 1 | | | | | |
| | | polybutene | | 3 | | | | | | 1 |
| | | methylphenylpolysiloxane | | | | | | | 1 | |
| | antifoaming agent | dimethylpolysiloxane | | | | | | 1 | | |
| | solvent | xylene (containing ethylbenzene) | 1 | 4 | | 3 | 3 | 4 | 3 | 3 |
| | | low-boiling point aromatic naphtha | | | | | | | 1 | |
| | | naphthene based hydrocarbon | | | | | 1 | | 1 | |
| | total of liquid a | | 83 | 86 | 86 | 86 | 85 | 84 | 83 | 84 |
| liquid b | curing catalyst | 3-triethoxysilyl-N-(1,3-dimethylbutylidene) propylamine | | 0.6 | | | | | 0.6 | |
| | | neodecanoic acid | | 1.0 | | | | | 1.0 | |
| | | di-n-butyltin dilaurate | 0.5 | | 0.6 | | 0.6 | | | 0.6 |
| | | diisopropoxybis (ethylacetoacetate) titanium | | | | 1.5 | | 1.5 | 0.5 | |
| | bleeding oil | polyether modified polysiloxane 1 | | 6 | 10 | | 3 | | 11 | |
| | | polyether modified polysiloxane 2 | 7 | | | 10 | 5 | | | |
| | | undecylenate glyceryl | 7 | | | | 4 | | | 13 |
| | | polyglyceryl-10 pentaoleate | | 4 | | | | 13 | | |
| | solvent | diethylene glycol monobutyl ether | 1 | | 1.0 | | 1 | | 1 | 1 |
| | | xylene (containina ethylbenzene) | 1.5 | 2.4 | 2.4 | 2.5 | 1.4 | 1.5 | 2.9 | 1.4 |
| | total of liquid b | | 17 | 14 | 14 | 14 | 15 | 16 | 17 | 16 |
| liquid a+liquid b | | | 100.0 | 100.0 | 100.0 | 100.0 | 100.0 | 100.0 | 100.0 | 100.0 |
| evaluation | adhesiveness test | | A | A | A | A | A | A | A | A |
| | antifouling test | 6 months | AA | AA | AA | AA | AA | AA | AA | AA |
| | | 12 months | AA | AA | AA | AA | AA | AA | AA | AA |
| | | 24 months | AA | AA | AA | AA | AA | AA | AA | AA |
| | | 36 months | AA | AA | AA | AA | AA | AA | AA | AA |

**[Table 27]**

| Table 27 | | | Example | | | |
|---|---|---|---|---|---|---|
| | | | 98 | 99 | 100 | 101 |
| liquid a | copolymerA | A64 | 62 | | | |
| | | A65 | | 64 | | |
| | | A66 | | | 68 | |
| | | A5 | | | | 67 |
| | anti-tarring agent | polyamide wax | | 1 | | |
| | pigment | red iron oxide | 3 | 2 | 3 | 3 |
| | | hydrophilic silica1 | 1 | 1 | 1 | 1 |
| | reactive oil | polyether modified alkoxysilane | | | | 3 |
| | additive | copper pyrithione | 7 | 8 | 7 | 8 |
| | | DCOIT (30% solution) | 3 | 3 | | |
| | | Zineb | 5 | | 4 | 4 |
| | plasticizer | polybutene | | 3 | | |
| | | methylphenylpolysiloxane | 1 | | | |
| | defoaming agent | dimethylpolysiloxane | | | 1 | |
| | solvent | xylene (containing ethylbenzene) | 4 | 5 | 2 | 4 |
| | total of liquid a | | 86 | 87 | 86 | 90 |
| liquid b | curing catalyst | 3-triethoxysilyl-N-(1,3-dimethylbutylidene) propylamine | 0.5 | | | |
| | | di-n-butyltin dilaurate | | | 0.5 | |
| | | diisopropoxybis (ethylacetoacetate) titanium | 1 | 1.5 | | 2 |
| | bleeding oil | polyether modified polysiloxane 1 | | 10 | | 6 |
| | | polyether modified polysiloxane 2 | 10 | | 7 | |
| | | undecylenate glyceryl | | | 4 | |
| | solvent | diethylene glycol monobutyl ether | | | 1.0 | |
| | | xylene (containing ethylbenzene) | 2.5 | 1.5 | 1.5 | 2.0 |
| | total of liquid b | | 14 | 13 | 14 | 10 |
| liquid a+liquid b | | | 100.0 | 100.0 | 100.0 | 100.0 |
| evaluation | adhesiveness test | | A | A | A | A |
| | antifouling test | 6 months | AA | AA | AA | AA |
| | | 12 months | AA | AA | AA | AA |
| | | 24 months | AA | AA | AA | AA |
| | | 36 months | AA | AA | AA | AA |

**[Table 28]**

| Table 28 | | | Comparative Example |
|---|---|---|---|
| | | | 1 |
| liquid a | resin | with silanol group at the end | 43.4 |
| | anti-tarring agent | polyamide wax | 1 |
| | | polyethylene oxide | 0.5 |
| | pigment | red iron oxide | 3 |
| | | silica | 0.5 |
| | antifouling agent | copper pyrithione | 8 |
| | bleeding oil | polyether modified polysiloxane 1 | 3 |
| | | polyether modified polysiloxane 2 | 7 |
| | | polyether modified polysiloxane 3 | 1 |
| | solvent | xylene-ethylbenzene mixed solvent | 22.6 |
| | | low-boilinq point aromatic naphtha | 1 |
| | total of liquid a | | 91 |
| liquid b | curing catalyst | di-n-butyltin dilaurate | 1 |
| | plasticizer | paraffin mineral oil | 1 |
| | | polybutene | 1 |
| | | chlorinated paraffin | 1 |
| | | methylphenylpolysiloxane | 1 |
| | crosslinker | partial hydrolytic condensation of tetraethoxysilane | 2.5 |
| | solvent | diethylene glycol monobutyl ether | 0.5 |
| | | xylene (containing ethylbenzene) | 1.0 |
| | total of liquid b | | 9 |
| liquid a+liquid b | | | 100.0 |
| evaluation | adhesiveness test | | C |
| | antifouling test | 6 months | AA |
| | | 12 months | AA |
| | | 24 months | AA |
| | | 36 months | AA |

The details of the antifouling agents and other additives in the above tables are as follows.

### <Anti-tarring Agent>

polyamide wax: product name "Disparlon A603-20X" (available from Kusumoto Chemicals, Ltd.)
polyethylene oxide: product name "Dispalon 4200-20" (available from Kusumoto Chemicals, Ltd.)

### <Pigment>

red iron oxide: red oxide: product name "BENGARA K!NGYOKU A-TYPE" (available from MORISHITA BENGARA KOGYO CO., LTD)
titanium oxide: product name "FR-41" (available from FURUKAWA CO., LTD.)
calcined kaolin: product name "Kaolin 90" (available from Toyokasei Co., Ltd.)
silica: product name "AEROSIL R972" hydrophobic fumed silica (available from Evonik Industries AG)
hydrophilic silica 1: product name "AEROSIL 200" hydrophilic fumed silica (available from Evonik Industries AG)
hydrophilic silica 2: product name "VP-4200" hydrophilic fumed silica (available from Evonik Industries AG)

### <Antifouling Agent>

copper pyrithione: product name "copper Omadine" (available from Lonza Group AG) zinc pyrithione: product name "zinc Omadine" (available from Lonza Group AG) cuprous oxide: product name "NC-301" (available from NISSIN CHEMCO)
tralopyril: product name "Econea" (4-bromo-2-(4-chlorophenyl)-5-(trifluoromethyl)-1H-pyrrole-3-carbonitrile) (available from JANSSEN PMP)
DCOIT (30% solution): product name "SEA-NINE 211N" 4,5-dichloro-2-n-octyl-3-isothiazolone (available from The Dow Chemical Company),
medetomidine: "selektope" "(+)-4-[1-(2,3-dimethylphenyl)ethyl]-1H-imidazole (available from I-Tech AB)
cuprous thiocyanate: product name "cuprous thiocyanate (I)" (available from FUJIFILM Wako Pure Chemical Corporation)
tolylfluanid: product name "Preventol A 5-S" N-{[dichrolo(fluoro)methyl]sulfanyl}-N',N'-dimethyl-N-p-trilsufamide (available from Lanxess AG)
Zineb: product name "Zineb" (available from Sigma-Aldrich, Inc.)
Diuron: product name "Diuron" (available from TOKYO CHEMICAL INDUSTRY CO., LTD.)

### <Bleeding Oil >

polyglycoside alkyl modified silicone oil: product name "BELISIL WO 5000" polysiloxane modified with side-chain alkyl and polyglucoside groups, diluted with polydimethylsiloxane (available from Wacker Chemie AG)
polyglycerin alkyl modified silicone oil: product name KF-6106, polysiloxane modified with side-chain polyglycerin, alkyl, and silicone (available from Shin-Etsu Chemical Co., Ltd.)
silicone oil having both terminals modified with polyglycerol: product name "SOFCARE GS-G" (available from Kao Corporation)
polyether modified silicone oil 1: product name "KF-6020" polysiloxane modified with side-chain polyethylene oxide and polypropylene oxide (available from Shin-Etsu Chemical Co., Ltd.)
polyether-modified silicone oil 2: product name "X-22-2516" polysiloxane modified with side-chain polyethylene oxide, polypropylene oxide, long alkyl, and aralkyl (available from Shin-Etsu Chemical Co., Ltd.)
polyether-modified silicone oil 3: product name "TSF4460" polysiloxane modified with side-chain polypropylene oxide (available from Momentive Performance Material, Inc.)
polysiloxane having both terminals modified with polyether: product name "KF-6123" polysiloxane modified with polyethylene oxide and polypropylene oxide at both terminals (available from Shin-Etsu Chemical Co., Ltd.)
alkyl modified silicone oil: product name "TSF4421" silicone oil modified with side chain alkyl (available from Momentive Performance Material, Inc.)
polyoxyethylene (30) lanolin: product name "NIKKOL TW-30" (available from Nikko Chemicals Co., Ltd.)
polyoxyethylene (40) castor oil: product name "NIKKOL CO-40" (available from Nikko Chemicals Co., Ltd.)
modified perfluoropolyether oil: product name "Fluorolink E10-H" perfluoropolyether oil having both terminals modified with polyoxyethylene (available from Solvay SA)
glyceryl undecylenate: product name "NIKKOL MGU" (available from Nikko Chemicals Co., Ltd.)
polyglyceryl-10 pentaoleate: product name NIKKOL Decaglyn 5-OV" (available from Nikko Chemicals Co., Ltd.)

### <Solvent>

xylene (containing ethylbenzene): containing 5 to 70% of ethylbenzene by weight, (reagent, available from TOKYO CHEMICAL INDUSTRY CO., LTD.)
low boiling point aromatic naphtha: product name "ShellSol A100" (available from Shell Chemicals Japan Ltd.)
white spirit: product name "T-SOL 3040" (available from ENEOS Corporation)
naphthene based hydrocarbon: EXXSOL DSP145/160 (available from Exxon Mobil Corporation)
paraffin based hydrocarbon: "ShellSol S" (available from Shell Chemicals Japan Ltd.)
acetylacetone: (reagent, available from TOKYO CHEMICAL INDUSTRY CO., LTD.)
dipropylene glycol: (reagent, available from TOKYO CHEMICAL INDUSTRY CO., LTD.)
diethylene glycol monobutyl ether (reagent, available from TOKYO CHEMICAL INDUSTRY CO., LTD.)
n-butanol (reagent, available from TOKYO CHEMICAL INDUSTRY CO., LTD.)

### <Curing Catalyst>

1-amino-2-ethylhexane: product name "1-Amino-2-ethylhexane" (HighChem Company Limited)
3- (trimethoxysilyl) propylamine: product name "KBM-903" (available from Shin-Etsu Chemical Co., Ltd.)
N-2-aminoethyl-3-aminopropyltrimethoxysilane: product name "GENIOSIL GF9" (available from Wacker Chemie AG)
N, N, N', N'-tetramethyl-N "-[3-(trimethoxysilyl)propyl]guanidine: (available from Construe Chemical Co., Ltd.)
3-triethoxysilyl-N-(1,3-dimethylbutylidene) propylamine: product name "KBE-9103P" (available from Shin-Etsu Chemical Co., Ltd.)
neodecanoic acid: (available from Marubeni Chemix Corporation)
di-n-butyltin dilaurate: product name " NEOSTANN U-100" (Nitto Chemical) (available from Nitto Kasei Co., Ltd.)
dibutylbis (2,4-pentanedionato) tin (IV): product name " NEOSTANN U-220H" (available from by Nitto Kasei Co., Ltd.)
titanium diisopropoxybis (ethylacetoacetate): product name "T-100" (available from Matsumoto Fine Chemical Co., Ltd.)

### <Plasticizer>

paraffin mineral oil: product name "Pure Safety 22" (available from COSMO OIL LUBRICANTS CO., LTD)
polybutene: product name "Nisseki Polybutene LV-50 (available from ENEOS Corporation)
chlorinated paraffin: product name "ToyoplaxA40S" (available from Tosoh Corporation)
methylphenylpolysiloxane: product name "KF-50" (available from Shin-Etsu Chemical Co., Ltd.)

### <Other Resins>

polyorganosiloxane with a silanol group at the end: product name "DMS-S35" Mw 49000 (available from Gelest, Inc.)
gamma-trimethoxy terminal modified polyether: product name "SPUR+1015LM" (available from Momentive Performance Material, Inc.)
alpha-dimethoxy terminal modified polypropylene glycol 1: product name "GENIOSIL STD-10" (available from Wacker Chemie AG)
alpha-dimethoxy terminal modified polypropylene glycol 2: product name "GENIOSIL XT 50" (available from Wacker Chemie AG)
alpha-dimethoxy terminal modified polypropylene glycol with a high degree of modification: product name "GENIOSILX B502" (available from Wacker Chemie AG)
dimethoxy terminal modified branched polypropylene glycol: product name "MS Polymer S303" (available from KANEKA CORPORATION)
polypropylene glycol: product name "Polypropylene glycol, diol type, 2,000" (available from FUJIFILM Wako Pure Chemical Corporation)
polyester polyol: product name "NIPPOLLAN 141" (available from Tosoh Corporation)
chlorinated polyolefin, chlorine content 41% (60% toluene solution): product name "814 HS" (available from Nippon Paper Industries Co., Ltd.)
chlorinated ethylene vinyl acetate copolymer, chlorine content 18% (20% toluene solution): product name " SUPERCHLON BX" (Nippon Paper Industries Co., Ltd.)
bisphenol A epoxy resin: product name " Epikote 828" (available from Mitsubishi Chemical Corporation)

### <Dehydrating Agent>

vinyltrimethoxysilane (Tokyo Chemical Industry Co., Ltd.)
tris (isopropenyloxy) vinylsilane: product name "LS-3975" (available from Shin-Etsu Chemical Co., Ltd.)
zeolite: Product name "Molecular Sieve 4A" (available from UNION SHOWA K.K.) gypsum anhydride: product name "D-1N" (NORITAKE CO., LIMITED)

### <Cross-linking Agent>

partial hydrolytic condensation of tetraethoxysilane: product name "TES40 WN" (available from Wacker Chemie AG)

### <Reactive Oil>

Polyether modified alkoxysilane: product name "Dynasylan 4150" methoxy PEG-10 propyltrimethoxysilane (available from Evonik Industries AG)

### <Defoaming agent>

dimethylpolysiloxane: product name "KF-96-100" (available from Shin-Etsu Chemical Co., Ltd.)

### 3. Evaluation

Adhesiveness and antifouling tests were conducted on the antifouling coating compositions of the Examples and Comparative Examples according to the following methods. The two-pack antifouling coating compositions were mixed just before testing. The test results are shown in Table 14 to Table 28.

As shown in the above table, the coating films formed using the antifouling coating compositions of all the Examples had excellent adhesiveness and antifouling properties. On the other hand, the coating films formed using the antifouling coating compositions of the Comparative Examples did not have good adhesiveness.

### <Adhesiveness Test>

Epoxy based primer HEMPADUR QUATTRO XO 17870 (available from HEMPELA/S) was applied on a hard vinyl chloride plate (110 x 60 x 2 mm) so that the dried film thickness would be 100µm. Subsequently, the sample for test was applied thereon so that the thickness of the dried coating film would be 200µm, followed by curing at room temperature for 48 hours, thereby obtaining the test plate. An X-shaped cut that reaches the antifouling coating was made using a cutter, and then the test plate was rubbed with a finger in a direction perpendicular to the cut. The adhesiveness of the coating film was evaluated in accordance with the following criteria.
A: coating film does not peel off
B: coating film peeled off partially around the cut
C: coating film peeled off easily

### <Antifouling Property Test>

Epoxy based primer HEMPADUR QUATTRO XO 17870 (available from HEMPELA/S) was applied on a hard vinyl chloride plate (110 x 60 x 2 mm) so that the dried film thickness would be 100µm. Further, silicone based tie coat HEMPASIL NEXUS X-TEND 27500 (available from HEMPEL A/S) was applied so that the dried film thickness would be 100µm. Subsequently, the sample for test was applied thereon so that the thickness of the dried coating film would be 200µm, followed by curing at room temperature for 7 days. The test plate was immersed at 2.0 m below sea level in Owase Bay for 12 months, and the test plate fouling due to attached objects was examined after 3 months, 6 months, and 12 months.

The state of the surface of the coating film was visually evaluated in accordance with criteria shown below.
AA: Fouling organisms such as shellfish or algae do not attach, and slime do not attach.
A: Fouling organisms such as shellfish or algae do not attach, and slime attaches.
B: Fouling organisms such as shellfish or algae attach partially.
C: Fouling organisms such as shellfish or algae attach entirely.

## Claims

1. An antifouling coating composition comprising a copolymer (A) and an antifouling agent, wherein the copolymer (A) has an alkoxysilyl group and an ethylenically unsaturated monomer unit and the ethylenically unsaturated monomer unit has a C6 to C24 branched alkyl group, wherein the copolymer (A) has the alkoxysilyl group at an end.

2. The antifouling coating composition of Claim 1, wherein the copolymer (A) has the alkoxysilyl group in a side chain.

3. The antifouling coating composition of Claim 1 or 2, wherein:
the copolymer (A) is a copolymer of a monomer (a) and a monomer (b) other than the monomer (a);
the monomer (a) is an ethylenically unsaturated monomer having the alkyl group.; and
a content of the monomer (a) is 1 to 90% by mass with respect to a total mass of the monomer (a) and (b).

4. The antifouling coating composition of any one of Claims 1 to 3, wherein the antifouling coating composition further comprises a bleeding oil.

## Patentansprüche

1. Antifouling-Beschichtungszusammensetzung, umfassend ein Copolymer (A) und ein Antifouling-Mittel, wobei das Copolymer (A) eine Alkoxysilylgruppe und eine ethylenisch ungesättigte Monomereinheit aufweist und die ethylenisch ungesättigte Monomereinheit eine verzweigte C6- bis C24-Alkylgruppe aufweist, wobei das Copolymer (A) die Alkoxysilylgruppe an einem Ende aufweist.

2. Antifouling-Beschichtungszusammensetzung nach Anspruch 1, wobei das Copolymer (A) die Alkoxysilylgruppe in einer Seitenkette aufweist.

3. Antifouling-Beschichtungszusammensetzung nach Anspruch 1 oder 2, wobei:
das Copolymer (A) ein Copolymer aus einem Monomer (a) und einem Monomer (b) ist, das von dem Monomer (a) verschieden ist;
das Monomer (a) ein ethylenisch ungesättigtes Monomer, das die Alkylgruppe aufweist, ist; und
ein Gehalt des Monomers (a) 1 bis 90 Massenprozent, bezogen auf die Gesamtmasse der Monomere (a) und (b), beträgt.

4. Antifouling-Beschichtungszusammensetzung nach einem der Ansprüche 1 bis 3, wobei die Antifouling-Beschichtungszusammensetzung ferner ein ausblutendes Öl enthält.

## Revendications

1. Composition de revêtement antisalissure comprenant un copolymère (A) et un agent antisalissure, dans laquelle le copolymère (A) possède un groupe alcoxysilyle et une unité monomère éthyléniquement insaturée, et l'unité monomère éthyléniquement insaturée possède un groupe alkyle en C6 à C24 ramifié, le copolymère (A) possédant le groupe alcoxysilyle à une extrémité.

2. Composition de revêtement antisalissure de la revendication 1, dans laquelle le copolymère (A) possède un groupe alcoxysilyle dans une chaîne latérale.

3. . Composition de revêtement antisalissure de la revendication 1 ou 2, dans laquelle :
le copolymère (A) est un copolymère d'un monomère (a) et d'un monomère (b) autre que le monomère (a);
le monomère (a) est un monomère éthyléniquement insaturé possédant le groupe alkyle; et
la teneur en monomère (a) est comprise entre 1 et 90 % en masse par rapport à la masse totale des monomères (a) et (b).

4. Composition de revêtement antisalissure de l'une des revendications 1 à 3, dans laquelle la composition de revêtement antisalissure comprend en outre une huile de ressuage.
